(19) Europäisches Patentamt
European Patent Office
Office européen des brevets

(11) **EP 4 429 362 A1**

(12) **EUROPEAN PATENT APPLICATION**
published in accordance with Art. 153(4) EPC

(43) Date of publication:
**11.09.2024 Bulletin 2024/37**

(21) Application number: **22890273.0**

(22) Date of filing: **27.10.2022**

(51) International Patent Classification (IPC):
**H04W 72/04** (2023.01)    **H04W 56/00** (2009.01)
**H04L 1/18** (2023.01)    **H04L 5/00** (2006.01)
**H04L 27/26** (2006.01)

(52) Cooperative Patent Classification (CPC):
**H04L 1/18; H04L 5/00; H04L 27/26; H04W 56/00;
H04W 72/04**

(86) International application number:
**PCT/KR2022/016520**

(87) International publication number:
**WO 2023/080538 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2021 US 202163275965 P**

(71) Applicant: **LG Electronics Inc.
Yeongdeungpo-gu
Seoul 07336 (KR)**

(72) Inventors:
• **KANG, Jiwon
Seoul 06772 (KR)**

• **PARK, Haewook
Seoul 06772 (KR)**
• **KIM, Hyungtae
Seoul 06772 (KR)**
• **KIM, Kyuseok
Seoul 06772 (KR)**
• **GO, Seongwon
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR MULTI-FREQUENCY UNIT-BASED SIMULTANEOUS TRANSMISSION OR RECEPTION IN WIRELESS COMMUNICATION SYSTEM**

(57) Disclosed are a method and a device for multi-frequency unit-based simultaneous transmission or simultaneous reception in a wireless communication system. A method for performing uplink transmission or downlink reception by a terminal in a wireless communication system according to an embodiment of the present disclosure may comprise the steps of: receiving, from a network, configuration information related to a group of frequency units for one or more of an uplink and a downlink; and on the basis of one or more of a reference signal-related resource and a channel-related resource for a first frequency unit and a second frequency unit included in the group of frequency units, performing, in the same time unit, uplink transmission or downlink reception on the first frequency unit and the second frequency unit, wherein the first frequency unit and the second frequency unit at least partially overlap on a frequency domain.

FIG.8

Receive configuration information related to frequency unit group for uplink/downlink — S810

Perform uplink transmission/downlink reception on a plurality of frequency units in the same time unit based on RS/CH-related resource for frequency unit group — S820

EP 4 429 362 A1

**Description**

[Technical Field]

The present disclosure relates to a wireless communication system, and in more detail, relates to a method and a device for multi-frequency unit-based simultaneous transmission or reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Object]

A technical object of the present disclosure is to provide a simultaneous transmission/reception method and device on an uplink and/or a downlink based on a multi-frequency unit in a wireless communication system.

An additional technical object of the present disclosure is to provide an independent uplink and/or downlink synchronization method and device for each frequency unit in a multi-frequency unit-based operation in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing uplink transmission or downlink reception by a terminal in a wireless communication system according to an aspect of the present disclosure includes receiving from a network configuration information related to a group of frequency units for at least one of an uplink or a downlink; and based on at least one of a reference signal-related resource or a channel-related resource for a first frequency unit and a second frequency unit included in the group of frequency units, performing in the same time unit uplink transmission or downlink reception on the first frequency unit and the second frequency unit, wherein the first frequency unit and the second frequency unit may at least partially overlap on a frequency domain.

A method for performing uplink reception or downlink transmission by a base station in a wireless communication system according to an additional aspect of the present disclosure includes transmitting to a terminal configuration information related to a group of frequency units for at least one of an uplink or a downlink; and based on at least one of a reference signal-related resource or a channel-related resource for a first frequency unit and a second frequency unit included in the group of frequency units, performing in the same time unit uplink reception or downlink transmission on the first frequency unit and the second frequency unit, wherein the first frequency unit and the second frequency unit may at least partially overlap on a frequency domain.

[Technical Effects]

According to an embodiment of the present disclosure, a simultaneous transmission/reception method and device on an uplink and/or a downlink based on a multi-frequency unit in a wireless communication system may be provided.

According to an embodiment of the present disclosure, an independent uplink and/or downlink synchronization method and device for each frequency unit in a multi-frequency unit-based operation in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a diagram for describing an example of a terminal's uplink transmission or downlink reception method according to the present disclosure.
FIG. 9 is a diagram for describing an example of a base station's uplink reception or downlink transmission method according to the present disclosure.
FIG. 10 is a diagram for describing a signaling procedure between a network side and a terminal side according to an embodiment of the present disclosure.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality

MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

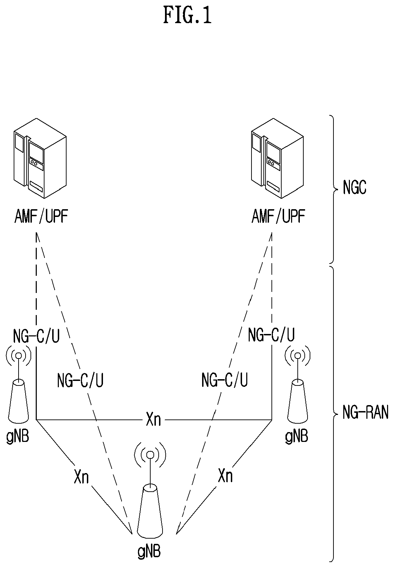

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

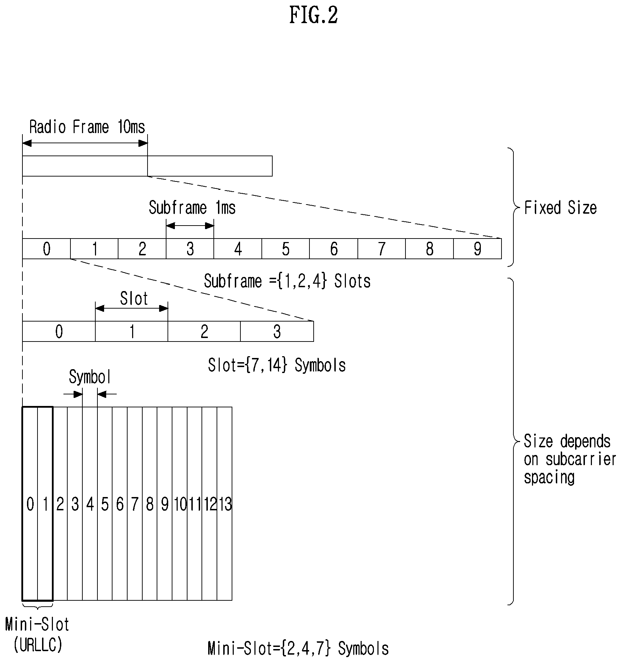

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N\varepsilon$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu\in\{0,..., N_{slot}^{subframe,\mu}-1\}$ in a subframe and are numbered in an increasing order of $n_{s,f}^\mu\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

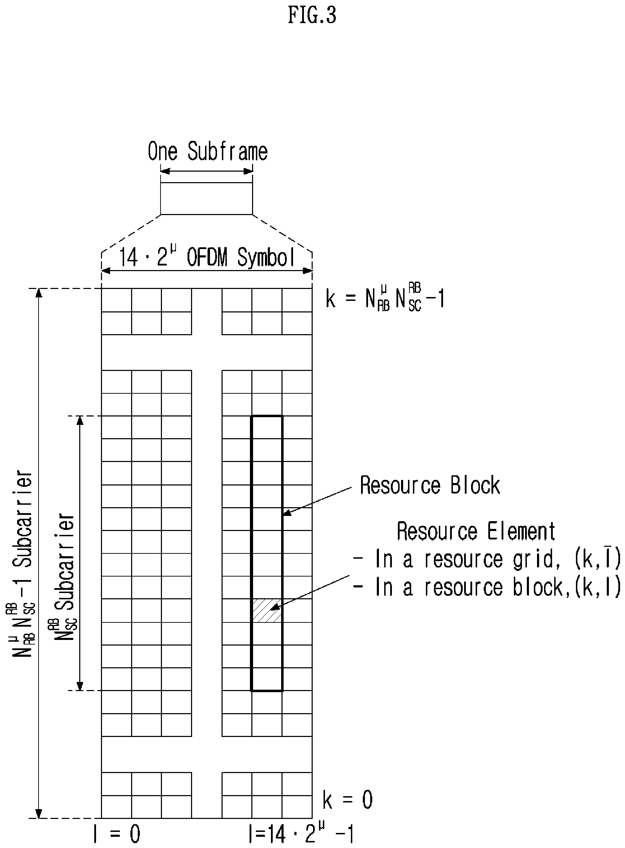

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14.2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB}=n^{\mu}_{PRB}+N^{start,\mu}_{BWP,i}$$

$N_{BWP,i}^{start,\mu}$ is a common resource block that a BWP starts relatively to common resource block 0.

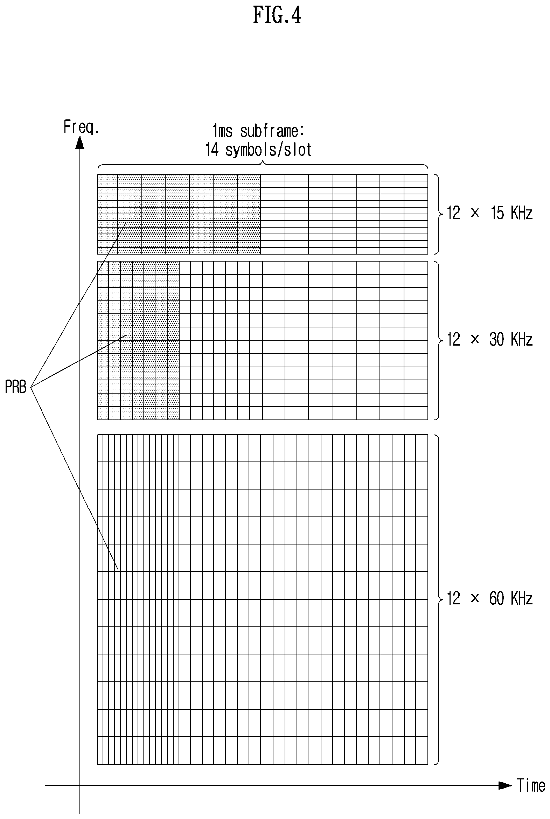

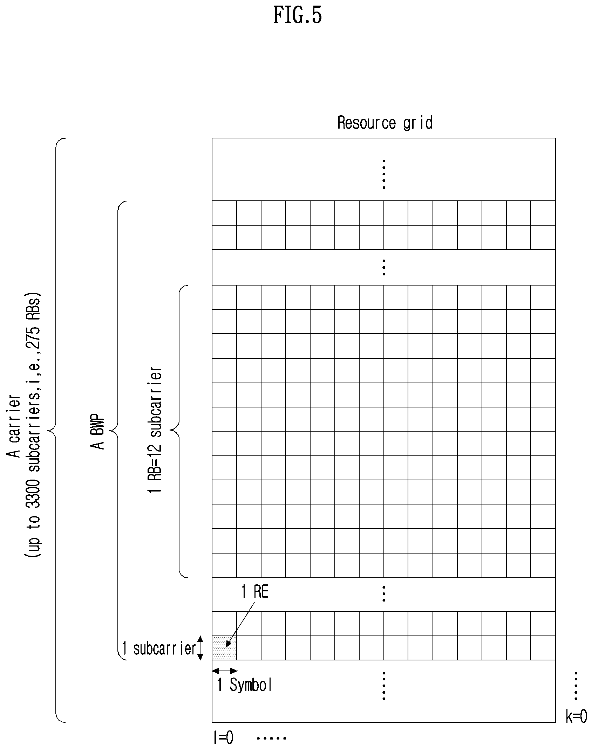

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

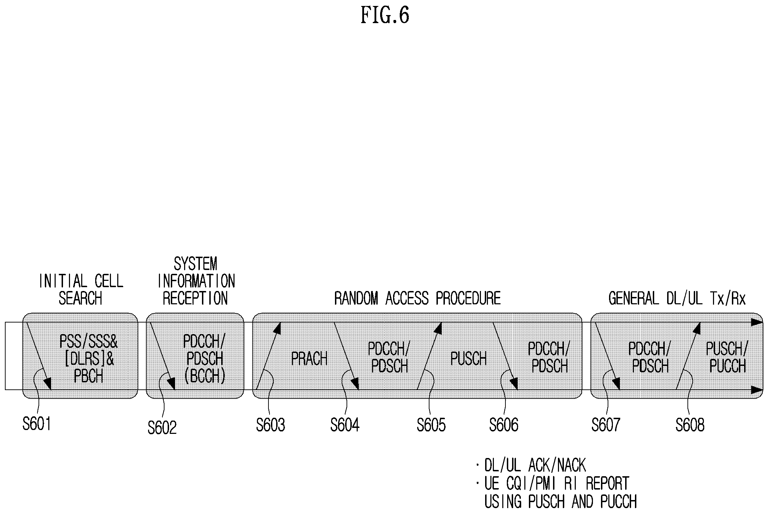

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme' is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

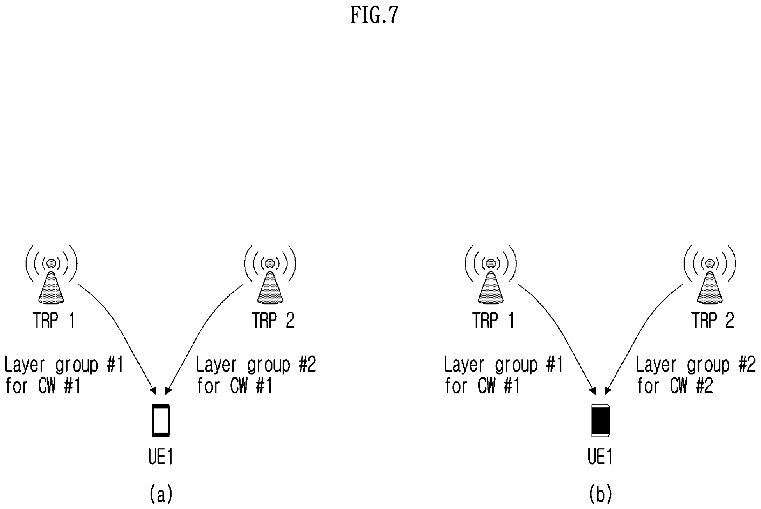

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following method is discussed.

1) Method 1 (SDM): Time and frequency resource allocation is overlapped and n (n<=Ns) TCI states in a single slot

1-a) Method 1a

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule.

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

- At one transmission time (occasion), the same TB having one DMRS port associated with multiple TCI state indexes is transmitted in one layer or the same TB having multiple DMRS ports one-to-one associated with multiple TCI state indexes is transmitted in one layer.
  In case of the method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.
  For the method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at every transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- Every transmission time (occasion) across K slots uses a common MCS with a single or multiple DMRS port(s).
- A RV/TCI may be the same or different at a different transmission time (occasion).

Hereinafter, MTRP URLLC is described.

In the present disclosure, DL MTRP URLLC means that multiple TRPs transmit the same data (e.g., the same TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is configured from a base station for which QCL RS/type (i.e., a DL TCI state) should be used in a layer/time/frequency resource receiving the same data/DCI. For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

And, in the present disclosure, UL MTRP-URLLC means that multiple TRPs receive the same data/UCI(uplink control information) from any UE by using a different layer/time/frequency resource. For example, TRP 1 receives the same data/DCI from UE in resource 1 and TRP 2 receives the same data/DCI from UE in resource 2 to share received data/DCI through a backhaul link connected between TRPs. UE configured with a UL MTRP-URLLC transmission method transmits the same data/UCI by using a different layer/time/frequency resource. In this case, UE is configured from a base station for which Tx beam and which Tx power (i.e., a UL TCI state) should be used in a layer/time/frequency resource transmitting the same data/DCI. For example, when the same data/UCI is transmitted in resource 1 and resource 2, a UL TCI state used in resource 1 and a UL TCI state used in resource 2 may be configured. Such UL MTRP URLLC may be applied to a PUSCH/a PUCCH.

In addition, in the present disclosure, when a specific TCI state (or TCI) is used (or mapped) in receiving data/DCI/UCI for any frequency/time/space resource (layer), it means as follows. For a DL, it may mean that a channel is estimated from a DMRS by using a QCL type and a QCL RS indicated by a corresponding TCI state in that frequency/time/space resource (layer) and data/DCI is received/demodulated based on an estimated channel. In addition, for a UL, it may mean that a DMRS and data/UCI are transmitted/modulated by using a Tx beam and power indicated by a corresponding TCI state in that frequency/time/space resource.

Here, an UL TCI state has Tx beam and/or Tx power information of UE and may configure spatial relation information, etc. to UE through other parameter, instead of a TCI state. An UL TCI state may be directly indicated by UL grant DCI or may mean spatial relation information of a SRS resource indicated by a SRI (sounding resource indicator) field of UL grant DCI. Alternatively, it may mean an open loop (OL) Tx power control parameter connected to a value indicated by a SRI field of UL grant DCI (e.g., j: an index for open loop parameter Po and alpha (up to 32 parameter value sets per cell), $q\_d$: an index of a DL RS resource for PL (pathloss) measurement (up to 4 measurements per cell), l: a closed loop power control process index (up to 2 processes per cell)).

Hereinafter, MTRP eMBB is described.

In the present disclosure, MTRP-eMBB means that multiple TRPs transmit different data (e.g., a different TB) by using a different layer/time/frequency. UE configured with a MTRP-eMBB transmission method receives an indication on multiple TCI states through DCI and assumes that data received by using a QCL RS of each TCI state is different data.

On the other hand, UE may figure out whether of MTRP URLLC transmission/reception or MTRP eMBB transmission/reception by separately dividing a RNTI for MTRP-URLLC and a RNTI for MTRP-eMBB and using them. In other words, when CRC masking of DCI is performed by using a RNTI for URLLC, UE considers it as URLLC transmission and when CRC masking of DCI is performed by using a RNTI for eMBB, UE considers it as eMBB transmission. Alternatively, a base station may configure MTRP URLLC transmission/reception or TRP eMBB transmission/reception to UE through other new signaling.

In a description of the present disclosure, it is described by assuming cooperative transmission/reception between 2 TRPs for convenience of a description, but a method proposed in the present disclosure may be also extended and applied in 3 or more multiple TRP environments and in addition, it may be also extended and applied in multiple panel environments (i.e., by matching a TRP to a panel). In addition, a different TRP may be recognized as a different TCI state to UE. Accordingly, when UE receives/transmits data/DCI/UCI by using TCI state 1, it means that data/DCI/UCI is received/transmitted from/to a TRP 1.

Hereinafter, methods proposed in the present disclosure may be utilized in a situation that MTRPs cooperatively transmit a PDCCH (repetitively transmit or partitively transmit the same PDCCH). In addition, methods proposed in the present disclosure may be also utilized in a situation that MTRPs cooperatively transmit a PDSCH or cooperatively receive a PUSCH/a PUCCH.

In addition, in the present disclosure, when a plurality of base stations (i.e., MTRPs) repetitively transmit the same PDCCH, it may mean the same DCI is transmitted through multiple PDCCH candidates and it may also mean that a plurality of base stations repetitively transmit the same DCI. Here, the same DCI may mean two DCI with the same DCI format/size/payload. Alternatively, although two DCI has a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception occasion of DCI, so if DCI received at n occasions and DCI received at n+1 occasions inform UE of the same scheduling result, a TDRA field of two DCI is different and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of the other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure, when a plurality of base stations (i.e., MTRPs) partitively transmit the same PDCCH, it means that one DCI is transmitted through one PDCCH candidate, but TRP 1 transmits some resources that such a PDCCH candidate is defined and TRP 2 transmits the remaining resources. For example, when a PDCCH candidate corresponding to aggregation level ml+m2 is partitively transmitted by TRP 1 and TRP 2, a PDCCH candidate may be divided into PDCCH candidate 1 corresponding to aggregation level m1 and PDCCH candidate 2 corresponding to aggregation level m2, and TRP 1 may transmit PDCCH candidate 1 and TRP 2 may transmit PDCCH candidate 2 to a different time/frequency resource. After receiving PDCCH candidate 1 and PDCCH candidate 2, UE may generate a PDCCH candidate corresponding to aggregation level m1+m2 and try DCI decoding.

In addition, in the present disclosure, when UE repetitively transmits the same PUSCH so that a plurality of base stations (i.e., MTRPs) can receive it, it may mean that UE transmitted the same data through multiple PUSCHs. In this case, each PUSCH may be optimized and transmitted to an UL channel of a different TRP. For example, when UE repetitively transmits the same data through PUSCH 1 and 2, PUSCH 1 is transmitted by using UL TCI state 1 for TRP 1 and in this case, link adaptation such as a precoder/MCS, etc. may be also scheduled/applied to a value optimized for a channel of TRP 1. PUSCH 2 is transmitted by using UL TCI state 2 for TRP 2 and link adaptation such as a precoder/MCS, etc. may be also scheduled/applied to a value optimized for a channel of TRP 2. In this case, PUSCH 1 and 2 which are repetitively transmitted may be transmitted at a different time to be TDM, FDM or SDM.

In addition, in the present disclosure, when UE partitively transmits the same PUSCH so that a plurality of base stations (i.e., MTRPs) can receive it, it may mean that UE transmits one data through one PUSCH, but it divides resources allocated to that PUSCH, optimizes them for an UL channel of a different TRP and transmits them. For example, when UE transmits the same data through 10 symbol PUSCHs, data is transmitted by using UL TCI state 1 for TRP 1 in 5 previous symbols and in this case, link adaptation such as a precoder/MCS, etc. may be also scheduled/applied to a value optimized for a channel of TRP 1. The remaining data is transmitted by using UL TCI state 2 for TRP 2 in the remaining 5 symbols and in this case, link adaptation such as a precoder/MCS, etc. may be also scheduled/applied to a value optimized for a channel of TRP 2. In the example, transmission for TRP 1 and transmission for TRP 2 are TDM-ed by dividing one PUSCH into time resources, but it may be transmitted by a FDM/SDM method.

In addition, similarly to the above-described PUSCH transmission, also for a PUCCH, UE may repetitively transmit the same PUCCH or may partitively transmit the same PUCCH so that a plurality of base stations (i.e., MTRPs) receive it.

Hereinafter, a proposal of the present disclosure may be extended and applied to a variety of channels such as a PUSCH/a PUCCH/a PDSCH/a PDCCH, etc.

A proposal of the present disclosure may be extended and applied to both a case in which various uplink/downlink channels are repetitively transmitted to a different time/frequency/space resource and a case in which various uplink/downlink channels are partitively transmitted to a different time/frequency/space resource.

In the present disclosure, a transmission occasion (TO) may correspond to a resource unit in which a channel is transmitted/received or a candidate resource unit in which a channel may be transmitted/received. For example, when multiple channels are transmitted in the TDM scheme, TO may mean each channel that is or may be transmitted in different time resources. For example, when multiple channels are transmitted in the FDM scheme, TO may mean each channel that is or may be transmitted in different frequency resources (e.g., RBs). For example, when multiple channels are transmitted in the SDM scheme, TO may mean each channel that is or may be transmitted in different layers/beams/DMRS ports. One TCI state may be mapped to each TO. When the same channel is repeatedly transmitted, a complete DCI/data/UCI may be transmitted in one TO, and the receiving end may receive multiple TOs to increase the reception success rate.

The above-described single DCI (S-DCI)-based multi-TB PUSCH/PDSCH scheduling scheme may be applied, for example, to a case that one DCI simultaneously schedules a plurality of PUSCH/PDSCHs in a very high frequency band (e.g., band above 5.26 GHz). For example, multiple time-domain resource allocations (TDRAs) (or TOs) may be indicated at once through a TDRA field of DCI for scheduling PUSCH, and different TBs may be transmitted through a PUSCH in each TO. Frequency domain resource allocation (FDRA), MCS, transmit precoding matrix indicator (TPMI), SRI values of Multi-TB PUSCH scheduling DCI may be commonly applied to a plurality of TBs scheduled by the corresponding DCI. In addition, NDI, RV may be individually/independently indicated for each TB through the multi-TB PUSCH scheduling DCI. In addition, in such multi-TB PUSCH scheduling DCI, one value is indicated for the HARQ (process) number (HPN), but values sequentially increasing in the TO order from the initial TO may be applied.

Multi-frequency unit-based simultaneous transmission/reception

New methods in which a terminal simultaneously transmits several channels (CH)/reference signals (RSs) of the same type, the terminal simultaneously transmits several CHs/RSs of different types are being discussed. In the conventional scheme, the operation of the terminal transmitting a plurality of CHs/RSs in one time point (or in one time unit) is restricted. For example, for a terminal according to the conventional scheme, simultaneous transmission of a plurality of SRS resources belonging to different SRS resource sets is supported for uplink beam measurement, but simultaneous transmission of a plurality of different PUSCHs is not supported. Therefore, in order to support a more advanced terminal operation by alleviating the above restrictions, a method for simultaneously transmitting a plurality of CHs/RSs using a plurality of transmission elements of one terminal is being discussed.

For example, according to the present disclosure, a terminal may simultaneously perform uplink transmissions for multiple transmission targets using multiple transmission elements. In addition, the base station may simultaneously receive the uplink transmissions transmitted through the multiple transmission elements from the terminal in the multiple transmission targets. For example, a transmission element of the terminal may correspond to an antenna group or an antenna panel, and one antenna group/panel may correspond to one RS set (or one RS candidate set). That is, the antenna group/panel may be indicated/identified by the RS (candidate) set. For example, the transmission target of uplink transmission from the terminal may correspond to a TRP or a cell, and one TRP/cell may correspond to one CORESET group/pool. That is, the TRP/cell may be indicated/identified by the CORESET group/pool. For example, a simultaneous uplink transmission scheme for multiple transmission targets through multiple transmission elements may be referred to as simultaneous transmission across multi-panel (STxMP). However, the scope of the present disclosure is not limited by the name of the transmission scheme, the examples of the unit of the transmission element, and/or the examples of the unit of the transmission target.

As one example of STxMP operation, two PUSCHs corresponding to two UL TBs (e.g., a first PUSCH carrying a first TB, a second PUSCH carrying a second TB) may be scheduled on the same RB. In addition, an individual TCI state may be configured/indicated for each of a plurality of PUSCH transmissions. A plurality of TCI states may correspond to a plurality of transmission elements (e.g., a panel/RS set), respectively. In addition, one transmission element may correspond to one transmission target, respectively, and a plurality of transmission elements may correspond to one transmission target.

For example, a first spatial relation RS and a first power control (PC) parameter set (or a first UL TCI state) may be configured/indicated for a first PUSCH transmission, and a second spatial relation RS and a second PC parameter set (or a second UL TCI state) may be configured/indicated for a second PUSCH transmission. For example, the terminal may transmit a first PUSCH using a first panel corresponding to a first UL TCI state in a first time unit, and may transmit a second PUSCH using a second panel corresponding to a second UL TCI state in the first time unit. For example, the terminal may transmit (for the first CORESET pool) the first PUSCH through the first RS set based on the first UL TCI state in the first time unit, and may transmit the second PUSCH (for the second CORESET pool) through the second RS set based on the second UL TCI in the first time unit. A time unit may correspond to at least one of a symbol, a symbol group, a slot, or a slot group.

STxMP transmission in which a terminal (multi-panel (MP) UE, MPUE) using a plurality of panels as described above generates a plurality of transmission beams simultaneously and performs uplink simultaneous transmission may improve uplink capacity, coverage and/or reliability. A STxMP transmission scheme may be classified as follows.

Scheme 1 is a scheme in which each panel transmits the same signal.

Scheme 1 is primarily aimed at improving uplink reliability and/or coverage. Scheme 1 may be also referred to as a scheme of applying to transmission of a plurality of uplink panels a DL single frequency network (SFN) transmission scheme, a scheme in which a plurality of TRPs simultaneously transmit the same signal in the same time-frequency resource in a downlink. In other words, a terminal panel in an uplink may correspond to a TRP in a downlink.

Scheme 2 is a scheme in which each panel transmits a different signal. If scheme 2 is classified more specifically, scheme 2-1 is a scheme in which a plurality of layers/ports configuring the same reference signal/channel (CH/RS) resource are divided and transmitted in each panel. Scheme 2-2 is a scheme in which each panel transmits a different CH/RS resource.

Scheme 2 is mainly aimed at improving uplink capacity/throughput/data rate/efficiency. Scheme 2-1 may be also referred to as a scheme that applies a downlink NCJT transmission method of a plurality of TRPs to transmission of a plurality of uplink panels. Scheme 2-2 corresponds to a scheme in which each panel transmits a different CH/RS (e.g., one panel transmits a PUCCH and another panel transmits a SRS) on the same time-frequency resource.

According to the previously defined and currently discussed MTRP operation scheme, a plurality of TRPs may divide or share and use RSs/Channels configured by a serving cell within the same component carrier (CC)/the same bandwidth part (BWP). For example, a TRP/beam change for the same RS/channel may be supported by a change in a QCL source RS or a spatial relation RS (in addition, pathloss RS). As another example, for a multi-DCI MTRP operation, each TRP may divide and use CORESETs within the same CCBWP (i.e., a separate CORESET pool may be used per TRP).

Unlike the existing MTRP operation defined for TRPs having the same physical layer cell identifier (PCI), extending a MTRP and multi-beam-related operation to TRPs having a different PCI has been recently being discussed. Even for this new MTRP operation, a discussion is underway by assuming an operation that RS/Channels configured by a serving cell within the same CC/BWP are divided or shared and used.

In the present disclosure, for frequency units to which individual/independent (e.g., different) synchronization (e.g., downlink synchronization and/or uplink synchronization) is applied, a simultaneous transmission/reception method when a resource position of frequency units partially or fully overlaps is described.

In order to support different downlink synchronization (e.g., a multi-DCI MTRP operation between TRPs having a different Fast Fourier Transform (FFT) window/timing), a different downlink frequency unit (e.g., a DL BWP/a DL) configuration may be applied per TRP. In order to support different uplink synchronization (e.g., STxMP transmission for TRPs having a different timing advance (TA) value per TRP/panel), a different uplink frequency unit (e.g., an UL BWP/an UL CC) configuration may be applied per panel/TRP. In addition, a frequency resource position (or a frequency resource and time resource position) between corresponding BWPs/CCs may be configured to partially/fully overlap.

In the following examples, for clarity of a description, it is assumed that a transmission/reception unit (e.g., a panel) of a terminal and a transmission target/a reception source (e.g., a TRP) correspond one-to-one, but a scope of the present disclosure is not limited thereto. In other words, even when a transmission/reception unit and a transmission target/a reception source correspond one-to-many or many-to-one, examples of the present disclosure may be also equally applied.

In the present disclosure, it is assumed that a transmission/reception unit and a transmission target/a reception source correspond to a frequency unit, and simultaneous transmission/reception is defined based on a plurality of frequency units. A frequency unit and a transmission/reception unit, or a frequency unit and a transmission target/a reception source may correspond one-to-one, one-to-many, or many-to-one. In particular, the present disclosure describes a new method for performing/supporting simultaneous transmission and reception when at least part of a plurality of frequency units overlap.

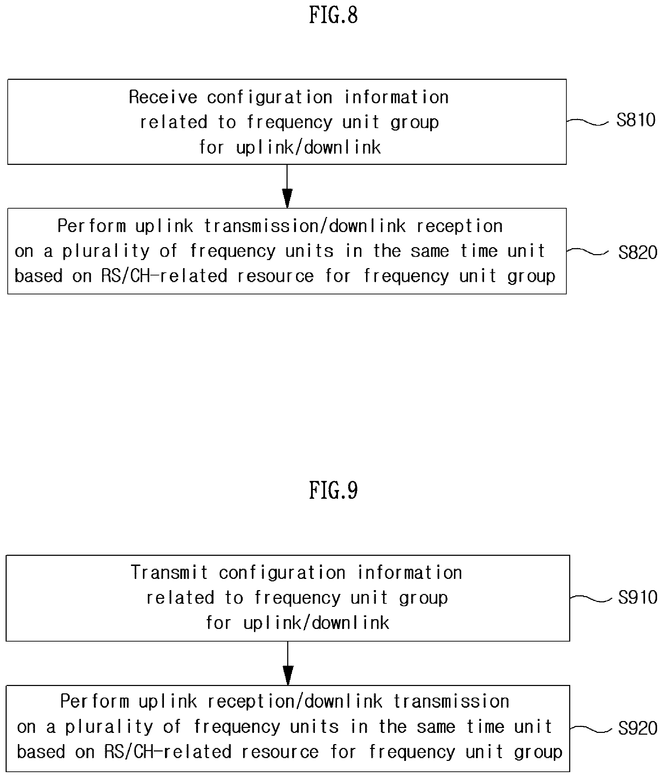

FIG. 8 is a diagram for describing an example of a terminal's uplink transmission or downlink reception method according to the present disclosure.

In S810, a terminal may receive configuration information related to a group of frequency units for at least one of an uplink or a downlink (hereinafter, an uplink/a downlink) from a network.

A group of frequency units may include a first frequency unit and a second frequency unit. For example, a first frequency unit and a second frequency unit may at least partially overlap on a frequency domain. For example, on a frequency domain, a first frequency unit may include a second frequency unit, a second frequency unit may include a first frequency unit, part of a first frequency unit and a second frequency unit may partially overlap, or a first frequency unit and a second frequency unit may fully overlap.

A group of frequency units (e.g., if one group is configured with two frequency units, it may also be referred to as a pair of frequency units) may be configured only for an uplink, may be configured only for a downlink, may be configured separately for an uplink and a downlink, or may be configured in a unified way for an uplink and a downlink.

A first frequency unit may belong to a first frequency unit pool, and a second frequency unit may belong to a second frequency unit pool. A frequency unit pool may correspond to a unit to which a synchronization parameter is applied/managed. In other words, the same synchronization parameter (set) may be applied/managed for frequency unit(s) belonging to one frequency unit pool. A different synchronization parameter (set) may be applied/managed for a different frequency unit pool. For example, a separate synchronization parameter (set) may be applied for each of a first frequency unit and a second frequency unit.

A synchronization parameter may include at least one of a timing advance (TA) value for an uplink, quasi-co-location (QCL) reference sharing related information for a downlink, or fast Fourier transform (FFT) window timing related information for a downlink.

A first frequency unit and a second frequency unit may be activated simultaneously. For example, information indicating/triggering activation of a first frequency unit and a second frequency unit may be provided to a terminal at the same time. Alternatively, a first frequency unit and a second frequency unit may be activated at the same time point (or a time unit).

A frequency unit may correspond to at least one of a cell or a bandwidth part (BWP). A cell may also be referred to as a CC. At least one BWP may be configured for one cell. A first and second frequency unit may correspond to a different BWP of the same cell, may correspond to a different cell, or may correspond to a BWP of each different cell (e.g., a first BWP of a first cell, and a second BWP of a second cell).

In S820, based on at least one of a reference signal (RS)-related resource or a channel (CH)-related resource for a frequency unit group (hereinafter, a RS/CH-related resource), a terminal may perform uplink transmission or downlink reception in the same time unit on a first frequency unit and a second frequency unit.

A reference signal-related resource may be defined/identified by one or a plurality of combinations of a time-frequency domain resource (e.g., a RE), a code domain resource (e.g., an orthogonal cover code (OCC)), a port, or a sequence.

A channel-related resource may be defined/identified by one or a plurlaity of combinations of a time-frequency domain resource (e.g., a RE), a CORESET, a port, or a layer.

For an overlapping resource of a first frequency unit and a second frequency unit of a group of downlink frequency units, based on a downlink channel/reference signal-related resource for a first frequency unit and the second frequency unit being common: i) one specific frequency unit identification information related to information included in the downlink channel may be applied, ii) single reporting information may be applied based on a downlink reference signal, or iii) single HARQ-ACK information may be applied to a downlink channel. A specific example therefor will be described later in Embodiment 1.

For an overlapping resource of a first frequency unit and a second frequency unit of a group of uplink frequency units, based on a downlink channel/reference signal-related resource for a first frequency unit and the second frequency unit being common: i) identification information on a downlink frequency unit related to information included in the uplink channel may be applied, or ii) identification information on a downlink frequency unit may be reported from a terminal to a network. A specific example therefor will be described later in Embodiment 2.

For an overlapping resource of a first frequency unit and a second frequency unit of a group of downlink frequency units, based on a downlink channel/reference signal-related resource for a first frequency unit and the second frequency unit being separate: i) individual HARQ-ACK information or single HARQ-ACK information may be applied to a downlink channel, or ii) individual reporting information or single reporting information may be applied based on a downlink reference signal. A specific example therefor will be described later in Embodiment 3.

For an overlapping resource of a first frequency unit and a second frequency unit of a group of uplink frequency units, based on a downlink channel/reference signal-related resource for a first frequency unit and the second frequency unit being separate: A different resource of the same uplink channel, a different resource of the same uplink reference signal, a different uplink channel, a different uplink reference signal, or an uplink channel and an uplink reference signal may be transmitted in the same time unit. A specific example therefor will be described later in Embodiment 4.

FIG. 9 is a diagram for describing an example of a base station's uplink reception or downlink transmission method according to the present disclosure.

In S910, a base station may transmit configuration information related to a group of frequency units for an uplink/a downlink to a terminal.

In S910, specific examples of configuration information related to a frequency unit group are the same as a description for S810 in FIG. 8, so an overlapping description is omitted.

In S920, a base station may perform uplink reception or downlink transmission in the same time unit on a first frequency unit and a second frequency unit, based on a RS/CH-related resource for a frequency unit group.

In S920, specific examples of a RS/CH-related resource and a transmission/reception operation on a first frequency unit and a second frequency unit in the same time unit are the same as a description for S820 in FIG. 8, so an overlapping description is omitted.

In the present disclosure, when certain information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., MAC-CE)) signaling.

Configuration of a plurality of Frequency Units

According to the present disclosure, a base station may configure a DL/UL BWP group (or a DL/UL BWP pair) or a DL/UL CC group (or a DL/UL CC pair) for a MTRP/MPUE operation to a terminal.

In the present disclosure, each BWP/CC belonging to the same BWP/CC pair may correspond to a resource used by each TRP or each panel participating in a MTRP/MPUE operation. For a plurality of BWPs/CCs belonging to a corresponding BWP/CC pair, a resource position (toward a frequency side) may fully/partially overlap.

For example, TRPs that separately use a plurality of BWPs/CCs may be limited to TRPs with a different cell identifier (e.g., PCI).

For example, for a time division duplex (TDD) system, a position of some DL/UL slots of a plurality of BWPs/CCs may overlap. Alternatively, a plurality of BWPs/CCs may be configured to have the same DL-UL slot structure/position. For example, if a DL-UL slot structure is configured for one BWP/CC, a configuration for the same DL-UL slot structure may be also applied to another paired BWP/CC.

For example, independent resource allocation/scheduling may be performed per TRP by using a BWP/CC pair. If it is difficult to coordinate between TRPs, examples of the present disclosure may be applied even when a BWP/a CC belonging to a BWP/CC pair to avoid interference between TRPs does not overlap.

In the present disclosure, each BWP/CC belonging to the same BWP/CC pair may be defined/configured as 'a unit to which a synchronization parameter and/or resource allocation is separately applied/managed'. For example, BWPs/CCs belonging to the same BWP/CC pair may be defined in the same/adjacent frequency band. For example, a synchronization parameter may include a timing advance (TA) value for an uplink, information on QCL reference sharing for a downlink, FFT window timing for a downlink, etc.

In the present disclosure, a set of (candidate) BWPs/CCs belonging to or applicable to each TRP/panel may be configured as a BWP/CC pool. In other words, BWPs/CCs belonging to a different BWP/CC pool (configured for the same or overlapping frequency resource) may correspond to a resource used by each TRP or panel participating in a MTRP/MPUE operation. In this case, it may be understood that a BWP/CC pair includes one BWP/CC belonging to a certain BWP/CC pool and another BWP/CC belonging to another BWP/CC pool.

In this case, each BWP/CC pool may correspond to 'a unit to which the same synchronization parameter is applied/managed'. In other words, a separate synchronization parameter may be applied/managed between different BWP/CC pools. The same/common synchronization parameter may be applied/managed to BWP/CC(s) belonging to the same one BWP/CC pool. For example, a timing advance group (TAG) may be expanded to be managed separately in a unit of a BWP/CC pool. Alternatively, a TA offset value may be also controlled per BWP/CC pool while maintaining the existing TAG unit. For example, it may be also applied in a unit of a BWP/CC pool while maintaining a TAG unit by using a predefined 'n-TimingAdvanceOffset' parameter as it is. Alternatively, a new parameter applied/managed in a unit of a BWP/CC pool may be defined.

For a DL/UL BWP pair, a plurality of DL/UL BWPs may be activated (simultaneously) within the same CC.

For example, a base station may instruct a terminal to activate a plurality of BWPs and/or switch to corresponding BWPs through a DCI/MAC-CE command, etc. among a plurality of candidate BWPs within a CC configured by RRC. In other words, configuring a CC/a BWP means that information on a corresponding CC/BWP is provided to a terminal, and in order to perform a transmission and reception operation on a corresponding CC/BWP, an activation procedure for a corresponding CC/BWP is required. A corresponding activation/switching command for a CC/a BWP may include BWP ID(s) to be activated/switched.

For example, after a certain period of time elapses after BWP switching is performed (e.g., when a BWP-related timer expires), a terminal may apply an operation to automatically return to a specific default BWP. When a DL/UL BWP pair is applied, it may be configured/defined to return to a plurality of default BWPs after a certain period of time elapses after BWP switching is performed. Alternatively, even when a DL/UL BWP pair is applied, a default BWP may be configured/defined only as a single BWP and may be configured/defined to return to a single TRP/panel operation.

In this case, for simultaneous DL/UL transmission performance, a plurality of activated BWPs may be defined to have the same subcarrier spacing (SCS). Alternatively, if a plurality of activated BWPs are allowed to have different SCS, reference SCS may be defined. Reference SCS is needed as a standard, etc. for calculating a TA value. For example, reference SCS may be defined as SCS of a BWP of specific order (e.g., of the lowest index or the highest index), or may be defined as the smallest or largest SCS of SCS for activated BWPs.

For a DL/UL CC pair, a plurality of DL or UL CCs overlapping (on a frequency axis) may be activated (simultaneously).

For example, CC#0 and CC#1 may be configured by overlapping fully/partially on a frequency axis by RRC, and these CC#0 and CC#1 may be activated simultaneously through a cell activation MAC-CE, etc.

For example, it may be assumed that CC#0 and CC#1 belong to CC pool#0 and CC#2 and CC#3 belong to CC pool#1. In addition, CC#0 and CC#2 may be configured on a (fully or partially) overlapping frequency (or frequency and time) resource, and CC#1 and CC#2 may be configured on a (fully or partially) overlapping frequency (or frequency and time) resource. In other words, overlap may be allowed between CCs belonging to a different pool.

In the present disclosure, for the purpose of reducing power consumption of a terminal, etc., paired BWPs/CCs may not always be activated.

For example, a base station may decide whether to activate BWP(s)/CC(s). For example, for a (potential) BWP/CC pair configured through a higher layer message (e.g., RRC/MAC-CE), a base station may configure/instruct a terminal to activate only some BWPs/CCs through a lower layer message (e.g., MAC-CE/DCI). Just in case that a terminal does not normally receive the activation indication information, a terminal's ACK (/NACK) transmission for a corresponding indication may be defined/configured. In addition, it may be defined/configured to perform a BWP/CC activation operation a certain period of time after normally receiving a base station's activation message or a certain period of time after transmitting ACK for a base station's activation message.

Alternatively, a terminal may decide/recommend whether to activate BWP(s)/CC(s). In this way, since a base station must also know information on activation determined by a terminal, for a (potential) BWP pair configured by a base station to a terminal, information on which BWP(s) will be/were activated by a terminal may be reported to a base station. Just in case that a base station does not normally receive such report information, a base station's ACK (/NACK) transmission for corresponding report may be defined/configured.

In the present disclosure, configuration for a DL BWP/CC pair and an UL BWP/CC pair and configuration/indication/control for whether to activate a BWP/a CC belonging to each BWP/CC pair, etc. may be performed independently. Alternatively, configuration/indication/control for BWP/CC pair configuration/activation and reporting thereof may be performed in an associated or unified way between a DL and an UL.

For example, an activation indication for BWP(s)/CC(s) may be performed in separate way or in unified way for a DL and an UL. Considering that an UL may be an operation more associated with a terminal panel and a DL is an operation more associated with a TRP, separate control or unified control may be applied.

For unified control for a DL and an UL, in order to perform simultaneous MTRP transmission in a DL, a terminal may assume that a plurality of panels are activated for DL reception, and may also perform STxMP transmission by using corresponding activated panels even for UL transmission.

For separate control for a DL and an UL, even if DL MTRP transmission is performed, an assumption that transmission in a single panel is performed may be applied in an UL.

Even if separate control is applied, considering that a terminal's implementation difficulty and power consumption required for UL simultaneous transmission are high, the number of UL BWP/CC(s) activated for each BWP/CC pair may be configured to be equal to or less than the number of DL BWP(s)/CC(s). For example, UL BWP(s)/CC(s) may be configured/indicated to correspond to a subset of activated DL BWPs/CCs.

In addition, for a plurality of BWP/CC pairs, specific DL or UL BWP/CC may overlap. For example, DL BWP0/CC0 may have a DL-UL pair relationship with UL BWP0/CC0 and also have a DL-UL pair relationship with UL BWP1/CC1, i.e., a plurality of BWP/CC pairs may share the same DL BWP/CC. It may correspond to a case in which an uplink supports STxMP transmission and a downlink supports single TRP (STRP) reception. As another example, UL BWP0/CC0 may have a DL-UL pair relationship with DL BWP0/CC0 and also have a DL-UL pair relationship with DL BWP1/CC1. In other words, a plurality of BWP/CC pairs may share the same UL BWP/CC. It may correspond to a case in which an uplink supports single panel transmission and a downlink supports MTRP reception.

In the present disclosure, it is assumed that the number of BWPs/CCs belonging to a BWP/CC pair is 2, but it is only for clarity of a description and does not limit a scope of the present disclosure. One BWP/CC pair (or a group of frequency units) may be configured to include at least three BWPs/CCs.

Hereinafter, based on the above-described description for a configuration for a group of frequency units (e.g., BWP/CC pairs) including a plurality of frequency units according to the present disclosure, examples of UL/DL transmission/reception through a plurality of distinct frequency units (e.g., BWP/CC) will be described. Hereinafter, specific examples of transmitting/receiving the same port(s)/layer(s) of the same channel/reference signal through a plurality of frequency units in the same time unit (e.g., simultaneously) (e.g., for reliability/coverage improvement, Embodiment 1 for DL SFN and Embodiment 2 for UL STxMP method 1) will be described.

Embodiment 1

According to this embodiment, a base station may configure/indicate DL SFN transmission to a terminal by configuring/indicating a DL RS/channel (of the same sequence) at the same (or overlapping) time-frequency position in each BWP/CC belonging to a DL BWP/CC pair.

A terminal receiving such a configuration/an indication may perform simultaneous reception of the same layer(s) while performing each doppler/delay-related large scale parameter measurement and/or reception beam (or Rx filter) configuration through each configured QCL RS information for each DL BWP/CC (while performing DL synchronization, respectively).

For example, a SFN PDCCH may be transmitted/received through a CORESET/search space (SS) configured at an overlapping time-frequency position in each BWP/CC belonging to a DL BWP/CC pair.

For example, a SFN CSI-RS may be transmitted/received through a CSI-RS (of the same port(s)) configured at an overlapping time-frequency position in each BWP/CC belonging to a DL BWP/CC pair.

For example, a SFN PDSCH may be transmitted/received through a PDSCH (of the same port(s)) scheduled at an overlapping time-frequency position in each BWP/CC belonging to a DL BWP/CC pair. In this case, the same DMRS port(s)/layer(s) may be transmitted in a first DL BWP/CC/PDSCH and a second DL BWP/CC/PDSCH. For a transmission rank (i.e., the number of layers) transmitted in an overlapping resource of a first DL BWP/CC/PDSCH and a second DL BWP/CC/PDSCH, the smaller value of transmission ranks configured/indicated for each of a first and second PDSCH may be applied. Alternatively, a terminal may expect that a transmission rank value configured/indicated for each of a first and second PDSCH is the same (i.e., a base station may configure a rank value to be the same). Alternatively, there may be a limit that a method in which the same PDSCH DMRS port(s)/layer(s) are transmitted in the overlapping resource of a first DL BWP/CC/PDSCH and a second DL BWP/CC/PDSCH is applied only to rank 1.

Embodiment 1-1

It may be assumed that Embodiment 1 is applied to a PDCCH carrying DCI. For example, a PDCCH may be transmitted/received through the same port(s) at an overlapping time-frequency position in a first DL BWP/CC and a second DL BWP/CC. In this case, a problem may occur in which a DL/UL BWP/CC to which fields included in DCI transmitted to a terminal (e.g., a variety of resource indicators/codepoints, etc.) will be applied through a corresponding PDCCH is unclear. For example, whether a PUCCH resource indicator (PRI), a SRS resource indicator (SRI), a CSI report trigger state, a TCI codepoint, a SRS triggering state, etc. included in DCI are about a PDSCH/a PUSCH scheduled in a first DL/UL BWP/CC, or are about a PDSCH/a PUSCH scheduled in a second DL/UL BWP/CC may not be clearly determined.

Even when Embodiment 1 for a PDSCH is applied, ambiguity similar to a PDCCH may occur. For example, a PDSCH may be transmitted/received through the same port(s) at an overlapping time-frequency position in a first DL BWP/CC and a second DL BWP/CC. In this case, a problem may occur in which a DL/UL BWP/CC to which a MAC CE and/or a RRC signaling information element (IE) transmitted through a corresponding PDCCH will be applied is unclear.

To resolve this ambiguity, the following examples may be applied.

One specific frequency unit (e.g., DL/BWP) identification information may be included in a DCI/MAC-CE/RRC signaling IE transmitted through a downlink channel (e.g., a PDCCH/a PDSCH) transmitted/received in a method of Embodiment 1 or through a separate DCI/MAC-CE/RRC signaling IE. One specific frequency unit identification information may be information (e.g., an ID of an active BWP) that identifies a source DL/UL frequency unit and/or a target DL/UL frequency unit to which information transmitted through a downlink channel is related/applied.

Alternatively, a rule for determining a source/target DL/UL frequency unit (e.g., an active BWP ID) to which a DCI/MAC-CE/RRC signaling IE transmitted through a downlink channel (e.g., a PDCCH/a PDSCH) transmitted/received in a method of Embodiment 1 is related/applied may be defined in advance. For example, it may be defined that the content of a DCI/MAC-CE/RRC signaling IE transmitted through a downlink channel is related/applied to a BWP corresponding to the lowest ID among active BWPs. As another example, it may be defined that the content of a DCI/MAC-CE/RRC signaling IE transmitted through a downlink channel is applied to each/all of UL BWPs/CC IDs that are consistent with (or are in a predetermined mapping relationship with) a DL BWP/CC ID where a downlink channel is received.

Embodiment 1-2

When Embodiment 1 is applied to a downlink reference signal (e.g., a CSI-RS, a SSB, etc.), an operation of reporting in each UL/BWP/CC corresponding to each DL BWP/CC may not be applied as before, when a terminal performs an operation of reporting information measured/calculated/determined from a corresponding reference signal (RS) to a base station (e.g., a CSI reporting/beam reporting/radio resource management (RRM) reporting operation, etc.). Since one measurement/calculation/determination result value is derived from a RS received in a SFN method from a plurality of DL BWPs/CCs, a new method for reporting this is required.

Reporting information including a result value (e.g., a CSI, a RSRP/a SINR, a RRM measurement value, etc.) derived based on a DL RS (e.g., a CSI-RS, a SSB, etc.) transmitted according to Embodiment 1-1 may be formed as single information (e.g., single UCI, a single MAC-CE, etc.). This single reporting information may be transmitted to a base station according to the following examples.

Embodiment 1-2-1

According to this embodiment, reporting may be disabled automatically or by a base station configuration on specific UL BWP(s)/CC(s) among UL BWPs/CCs for a corresponding DL BWP/CC pair. In other words, a terminal may transmit reporting information based on a DL RS received from a plurality of DL BWPs/CCs on specific (one) UL BWP(s)/CC(s) defined/configured/indicated in advance.

In which UL BWP/CC reporting will be performed may be configured/indicated in advance by a base station or may be determined by a specific rule (e.g., an active BWP/CC with a lower ID).

In transmitting reporting information on one specific UL BWP/CC, it may be transmitted by applying only an UL TCI (or a spatial relation parameter) configured/indicated for corresponding one specific UL BWP/CC, but it may be defined/configured to perform transmission by using/applying an UL TCI configured/indicated for another (or disabled) UL BWP/CC together (e.g., according to STxMP scheme 1).

Embodiment 1-2-2

According to this embodiment, a terminal may repeatedly transmit reporting information through a PUCCH/a PUSCH configured in a plurality of UL BWPs/CCs.

Embodiment 1-2-3

According to this embodiment, a terminal may transmit reporting information according to STxMP scheme 1 through a (overlapping) PUCCH/PUSCH configured in a plurality of UL BWPs/CCs.

Embodiment 1-2-2 may be applied when UL BWPs/CCs do not have a pair relationship or do not overlap between configured reporting resources (e.g., PUCCH/PUSCH). Embodiment 1-2-3 may be applied when UL BWPs/CCs have a pair relationship and/or overlap between reporting resources (e.g., PUCCH/PUSCH). It will be described in more detail by referring to Embodiment 2.

In addition, an indicator for a DL BWP/CC described by a terminal's reporting information may be included in corresponding reporting information. For example, through a beam failure recovery (BFR) MAC-CE, in which CC a beam failure occurred may be reported through CC ID(s). When Embodiment 1 is applied, DL BWPs/CCs belonging to a BWP/CC pair transmit the same signal together, so when a terminal reports BWP/CC information, it may refer to any BWP/CC in a pair relationship. Accordingly, it may be configured to define/configure a reporting rule (e.g., report only one specific BWP/CC among BWPs/CCs belonging to a BWP/CC pair), or report it by using a BWP/CC pair ID instead of a BWP/CC ID. Alternatively, if a BWP/CC pair exists, the payload of reporting information may be reduced by assigning only one codepoint to each pair.

These examples (e.g., assigning one codepoint per pair, or using a BWP/CC pair ID) may be used not only for a terminal's reporting information, but also for a base station's configuration/indication information (instead of or in addition to the existing BWP/CC information).

Embodiment 1-3

This embodiment relates to a method for transmitting ACK(/NACK) information on downlink channel (e.g., PDSCH/PDCCH) transmission according to Embodiment 1. HARQ-ACK information may be transmitted for a PDSCH/a DL-SCH, and ACK information on specific DCI (e.g., DCI for SPS release, DCI for a TCI indication, etc.) may be transmitted for a PDCCH, and since a corresponding DL-SCH or DCI is transmitted in a SFN method, the need to transmit ACK (/NACK) repeatedly for this may be low.

According to this embodiment, for a PDCCH/a PDSCH transmitted according to Embodiment 1, ACK(/NACK) information on a corresponding channel (e.g., a PDCCH/a PDSCH) or information transmitted through a corresponding channel (e.g., DCI/DL-SCH) may be formed as single information (e.g., single HARQ-ACK, single ACK). This single ACK/(NACK) information may be transmitted to a base station according to the following examples.

Embodiment 1-3-1

According to this embodiment, ACK(/NACK) information transmission on specific UL BWP(s)/CC(s) among UL BWPs/CCs for a corresponding DL BWP/CC pair may be disabled automatically or by a base station configuration. In other words, a terminal may transmit ACK (/NACK) information based on a DL RS received from a plurality of DL BWPs/CCs on specific (one) UL BWP(s)/CC(s) defined/configured/indicated in advance.

In which UL BWP/CC ACK(/NACK) information transmission will be performed may be configured/indicated in advance by a base station or may be determined by a specific rule (e.g., an active BWP/CC with a lower ID).

In transmitting ACK(/NACK) information on one specific UL BWP/CC, it may be transmitted by applying only an UL TCI (or a spatial relation parameter) configured/indicated for corresponding one specific UL BWP/CC, but it may be configured/defined to perform transmission by using/applying an UL TCI configured/indicated for another (or disabled) UL BWP/CC together (e.g., according to STxMP scheme 1).

Embodiment 1-3-2

According to this embodiment, a terminal may repeatedly transmit ACK(/NACK) information through a PUCCH/a PUSCH configured in a plurality of UL BWPs/CCs.

Embodiment 1-3-3

According to this embodiment, a terminal may transmit reporting ACK(/NACK) information according to STxMP scheme 1 through a (overlapping) PUCCH/PUSCH configured in a plurality of UL BWPs/CCs.

Embodiment 1-3-2 may be applied when UL BWPs/CCs do not have a pair relationship or do not overlap between configured ACK(/NACK) information transmission resources (e.g., PUCCH/PUSCH). Embodiment 1-3-3 may be applied when UL BWPs/CCs have a pair relationship or overlap between ACK(/NACK) information transmission resources (e.g., PUCCH/PUSCH). It will be described in more detail by referring to Embodiment 2.

Embodiment 2

According to this embodiment, a base station may configure/indicate STxMP Scheme 1 to a terminal by configuring/indicating an UL RS/channel (of the same sequence) at the same (or overlapping) time-frequency position in each BWP/CC belonging to an UL BWP/CC pair. It is similar to Embodiment 1 which supports MTRP SFN transmission through BWP/CC overlap in a downlink.

A terminal that received this configuration/indication may perform simultaneous transmission of the same layer(s) by applying an separate spatial parameter and separate power control to each DL BWP/CC. Specifically, a terminal may perform simultaneous transmission of the same layer(s) while performing UL power control (for each panel/beam performing simultaneous transmission) according to a transmission beam (or Tx filter) configuration and each configured UL power control-related information (e.g., a pathloss RS, a closed-loop power control index, an open-loop power control parameter) (for each panel performing simultaneous transmission) through each configured spatial relation RS/UL TCI information for each DL BWP/CC (while performing DL synchronization, respectively).

For example, a PUCCH/a PRACH in STxMP Scheme 1 may be transmitted/received through a PUCCH/a PRACH configured at an overlapping time-frequency position in each BWP/CC belonging to an UL BWP/CC pair.

For example, a SRS in STxMP Scheme 1 may be transmitted/received through a SRS (of the same port(s)) configured at an overlapping time-frequency position in each BWP/CC belonging to an UL BWP/CC pair.

For example, a PUSCH in STxMP Scheme 1 may be transmitted/received through a PUSCH (of the same port(s)) scheduled at an overlapping time-frequency position in each BWP/CC belonging to an UL BWP/CC pair. In this case, the same DMRS port(s)/layer(s) may be transmitted in a first UL BWP/CC/PDSCH and a second UL BWP/CC/PDSCH. For a transmission rank (i.e., the number of layers) transmitted in the overlapping resource of a first UL BWP/CC/PDSCH and a second UL BWP/CC/PDSCH, the smaller value of transmission ranks configured/indicated for each of a first and second PUSCH may be applied. Alternatively, a terminal may expect that a transmission rank value configured/indicated for each of a first and second PUSCH is the same (i.e., a base station may configure a rank value to be the same). Alternatively, there may be a limit that a method in which the same PUSCH DMRS port(s)/layer(s) are transmitted in the overlapping resource of a first UL BWP/CC/PDSCH and a second UL BWP/CC/PDSCH is applied only to rank 1.

Embodiment 2-1

It may be assumed that Embodiment 2 is applied to a PUCCH/a PUSCH carrying UCI or a PUSCH carrying an UL-SCH. For example, the same UCI/UL-SCH may be simultaneously transmitted/received in a PUCCH/a PUSCH through the same port(s) through a plurality of beams/panels at an overlapping time-frequency position in a first UL BWP/CC and a second UL BWP/CC. In this case, a problem may occur in which DL/UL BWP/CC to which fields included in L1/L2 reporting information transmitted to a base station through a corresponding UCI/UL-SCH (e.g., a variety of resource indicators/codepoints/metrics, etc.) will be applied is unclear. For example, a base station may not clearly determine a RS in a DL BWP/CC on which reporting information included in UCI/UL-SCH is based, including a CSI-RS resource indicator (CRI), a SSB resource indicator (SSBRI), a PMI, a RSRP, etc.

To resolve this ambiguity, the following examples may be applied.

With regard to (L1/L2) reporting information transmitted through an uplink channel (e.g., a PUCCH/a PUSCH) transmitted/received in a method of Embodiment 2, a base station may configure/indicate in advance to a terminal which DL BWP/CC (ID)(s) will be used by a terminal as a standard to perform measurement/reporting.

Alternatively, a rule for determining which DL BWP/CC (ID)(s) will be used as a standard by (L1/L2) reporting information transmitted through an uplink channel (e.g., a PUCCH/a PUSCH) transmitted/received in a method of Embodiment 2 may be defined in advance. For example, L1/L2 reporting may be performed based on a BWP/a CC corresponding to the lower/higher ID among DL BWPs/CCs corresponding to an UL BWP/CC pair.

Embodiment 2-2

The above-described example mainly relates to reporting/transmission of a terminal performed based on a configuration/an indication of a base station. In addition, Embodiment 2 may be also applied to a channel/a signal reported/transmitted to a base station when a specific event occurs in a terminal (e.g., a contention based PRACH, a beam failure recovery request through a SR PUCCH/PRACH, a scheduling request (SR), etc.).

For this terminal event-based transmission, there is a problem that in which DL BWP/CC among DL BWPs/CCs connected to an UL BWP/CC pair a corresponding event occurred is unclear, and examples of the present disclosure for solving this are as follows.

In performing event-based reporting/transmission of a terminal by applying Embodiment 2 to a (SR) PUCCH, a (SPS) PUSCH, a (contention-based) PRACH, etc., a terminal may report to a base station information on at least one specific DL BWP/CC among a plurality of DL BWPs/CCs connected to an UL BWP/CC pair. For example, at least one specific DL BWP/CC may be DL BWP(s)/CC(s) where a corresponding event occurred, may be DL BWP(s)/CC(s) that wish to receive a response to corresponding event-based UL reporting/transmission, or may be DL BWP(s)/CC(s) that do not wish to receive a response to corresponding event-based UL reporting/transmission. In addition, information on at least one specific DL BWP/CC may be transmitted to a base station together with corresponding event-based UL reporting/transmission, or may be transmitted to a base station separately (e.g., through a separate message after corresponding event-based UL reporting/transmission).

Based on information on the at least one specific DL BWP/CC, in which BWP/CC subsequent DL transmission (to the event-based UL reporting/transmission) will be performed may be determined. For example, subsequent DL transmission may be performed in a BWP/a CC where the event occurred, or in a BWP/a CC where the event did not occur. For example, for a beam failure or a wireless link failure event, if a corresponding event occurred only in a first DL BWP/CC, subsequent DL transmission may be performed in a second DL BWP/CC where a corresponding event did not occur.

When Embodiment 2 is applied, UL BWPs/CCs belonging to a BWP/CC pair transmit the same signal together, so when a base station or a terminal refers to an UL BWP/CC, it may refer to any BWP/CC in a pair relationship. Accordingly, it may be configured to define/configure a reporting rule (e.g., report only one specific BWP/CC among BWPs/CCs belonging to a BWP/CC pair), or report it by using a BWP/CC pair ID instead of a BWP/CC ID. Alternatively, if a BWP/CC pair exists, the payload of reporting information may be reduced by assigning only one codepoint to each pair.

In Embodiment 2-1 and 2-2, it was described in terms of a terminal's reporting operation, and in addition, even when a base station's response to UL transmission of STxMP Scheme 1 is performed through DL transmission, a similar method may be also applied to through which DL frequency unit the response is transmitted/received. For example, for a base station's ACK transmission for a terminal's UL-SCH/UCI transmission, a base station's response message transmission for a terminal's higher layer message (e.g., MAC-CE, RRC signaling IE) transmission, a base station's DL transmission subsequent to a terminal's SRS/PRACH transmission, etc., UL transmission may be performed according to STxMP Scheme 1 of Embodiment 2. In this case, if a plurality of DL BWPs/CCs are connected to a corresponding UL BWP/CC pair, subsequent DL transmission may be performed in at least one specific DL BWP/CC. Here, at least one specific DL BWP/CC may be determined according to a predefined rule, according to a configuration/an indication of a base station, according to whether/situation a terminal event occurs, or according to a terminal's choice in a way similar to the above-described examples.

Hereinafter, specific examples (e.g., Embodiment 3 for DL NCJT or Embodiment 4 for UL STxMP Scheme 2, for improving capacity/throughput/data rate/efficiency) for transmitting/receiving a different port/layer of the same channel/reference signal and/or a different channel/reference signal through a plurality of frequency units in the same time unit (e.g., simultaneously) will be described.

Embodiment 3

According to this embodiment, a base station may configure/indicate simultaneous transmission for DL NCJT or heterogeneous CH/RS to a terminal by configuring/indicating a DL RS/CH at a fully/partially/non-overlapping time-frequency position in each BWP/CC belonging to a DL BWP/CC pair.

Here, whether a plurality of frequency units overlap and whether time-frequency resources on which DL transmission/reception is performed overlap are distinguished. In other words, a frequency unit is about a resource where transmission/reception may be performed, and actually, a resource where transmission/reception is performed may be part/all of resources belonging to a frequency unit. Specifically, a plurality of frequency units belonging to a frequency unit group/pair overlap at least partially, and among a plurality of frequency units, a position of a time-frequency resource where simultaneous transmission for DL NCJT or heterogeneous CH/RS is performed may fully overlap, may partially overlap, or may not overlap.

A terminal that received this configuration/indication may perform simultaneous reception of port(s)/layer(s), while performing each doppler/delay-related large scale parameter measurement and/or reception beam (or Rx filter) configuration through each configured QCL RS information for each DL BWP/CC (while performing DL synchronization, respectively).

If a resource fully/partially overlaps, port(s)/layer(s) may be simultaneously transmitted/received in an overlapping resource. For example, for simultaneous transmission/reception for 2 ports in DL BWP0 and 2 ports in DL BWP1, 4 ports may be simultaneously transmitted in an overlapping resource (i.e., through a different reception beam/panel per 2 ports).

When a resource does not overlap (i.e., is transmitted/received at a different frequency position in the same time unit (e.g., symbol)), simultaneous transmission/reception may be performed based on beam-related information configured for each resource (e.g., QCL source RS information).

For example, CSI-RS ports belonging to corresponding CSI-RS resources may be simultaneously transmitted/received through CSI-RS resources configured at an overlapping resource position. Specifically, the same CSI-RS resource (i.e., the same sequence at the same/overlapping RE position) is allocated to each BWP/CC in a duplicate/overlapping manner, but different port(s) may be allocated. Accordingly, orthogonality may be secured between CSI-RSs in each BWP/CC. Alternatively, a different CSI-RS resource may be allocated in an overlapping way for each BWP/CC. In this case, in order to secure (quasi-)orthogonality between antenna ports belonging to overlapping CSI-RS resources, TDM/FDM/CDM that distinguishes resources in a time/frequency/code domain may be applied. For CDM, a method for applying a time/frequency domain orthogonal cover code (OCC), or a parameter related to CSI-RS sequence generation (e.g., a sequence initialization parameter) may be configured/adjusted differently. Accordingly, a (quasi-)orthogonal sequence may be applied between overlapping CSI-RS resources.

For example, a NCJT PDSCH may be transmitted/received through a PDSCH scheduled at an overlapping resource position. In this case, since separate DCI is applied to a PDSCH belonging to each DL BWP/CC, it may be understood similarly to a multi-DCI-based MTRP operation. In addition, different port(s) may be applied between DMRSs transmitted for each DL BWP/CC/PDSCH. For a transmission rank transmitted in an overlapping resource, the sum of transmission ranks configured/indicated for each PDSCH may be applied. In addition, terminal complexity according to a variety of rank combinations may be reduced by limiting a transmission rank configured/indicated to each PDSCH to be the same, and/or limiting it to be equal to or less than a predetermined rank value (e.g., rank 1). In addition, a rank combination supported by a terminal may be reported to a base station (in advance as terminal capability reporting information).

For example, DL RS/CH #0 configured/allocated in BWP0/CC0 and DL RS/CH #1 configured/allocated in BWP1/CC1 are fully/partially/non-overlapping, so DL RS/CH #0 and DL RS/CH #1 may be transmitted/received simultaneously. In this case, a different DL RS resource/channel may overlap. Even for a non-overlapping case, even when a different QCL source RS is allocated to DL RS/CH #0 and DL RS/CH #1 at a different frequency position particularly in the same symbol, simultaneous transmission as above may be applied. Unlike a single panel operation which does not support transmission/reception based on a different QCL source RS in the same symbol, in a multi-panel operation, transmission/reception based on a different QCL source RS in the same symbol may be supported.

When all operations according to Embodiment 1 (i.e., a method for simultaneously transmitting/receiving a DL RS/CH through a plurality of frequency unit-based common resources, e.g., DL SFN) and Embodiment 3 (i.e., a method for simultaneously transmitting/receiving a DL RS/CH through a plurality of frequency unit-based individual resources, e.g., DL NCJT or heterogeneous RS/CH simultaneous transmission/reception) are supported, it may be unclear which operation should be applied among Embodiment 1 or Embodiment 3, when a terminal is configured/allocated with an overlapping DL CH/RS from a DL BWP/CC pair. In order to solve this, the following example may be applied.

For example, which operation of Embodiment 1 or Embodiment 3 will be applied to an overlapping resource may be explicitly configured/indicated to a terminal through RRC/MAC-CE/DCI, etc.

Alternatively, which operation of Embodiment 1 or Embodiment 3 will be applied may be implicitly configured/indicated from a port index/position information, etc. of an overlapping resource. For example, when the same CH/RS resource overlaps and even a port index/position belonging to a corresponding resource overlaps, Embodiment 1 (e.g., DL SFN) may be applied. Alternatively, when the same CH/RS resource overlaps and a port index/position belonging to a corresponding resource is different, Embodiment 3 (e.g., DL NCJT) may be applied. Alternatively, when a different (type) CH/RS resource overlaps, a simultaneous transmission/reception method for a heterogeneous resource in Embodiment 3 may be applied.

Embodiment 3-1

According to Embodiment 3, when DL NCJT transmission for a DL-SCH/PDSCH is supported, like a multi-DCI-based MTRP operation, joint HARQ-ACK and/or independent HARQ-ACK for a corresponding PDSCH may be supported. In this case, there is a problem that an UL BWP/CC transmitting HARQ-ACK is unclear, and in order to solve this, the following example may be applied.

According to Embodiment 3, when DL NCJT transmission for a DL-SCH/PDSCH is supported, HARQ-ACK for a corresponding DL-SCH/PDSCH may be transmitted through one of the following methods.

According to an independent HARQ-ACK method, a terminal may separately encode HARQ-ACK for each scheduling/scheduled DL-SCH/PDSCH in each DL BWP/CC belonging to a DL BWP/CC pair and report it to a base station. For example, if an UL BWP/CC connected to each DL BWP/CC is different (and if a corresponding UL BWP/CC belongs to a specific type (e.g., an UL BWP/CC which may be transmitted by a PUCCH, such as SpCell or PUCCH-SCell)), HARQ-ACK information may be transmitted respectively to a corresponding UL BWP/CC. Alternatively, when a common UL BWP/CC is connected to a DL BWP/CC pair (and when a corresponding UL BWP/CC does not belong to a specific type (e.g., an UL BWP/CC which may be transmitted by a PUCCH, such as SpCell or PUCCH-SCell)), an individually encoded HARQ-ACK transmission procedure transmitted on a specific UL BWP/CC (e.g., a primary UL BWP/CC) may be applied.

According to a joint HARQ-ACK method, a terminal may jointly encode each HARQ-ACK for a scheduling/scheduled DL-SCH/PDSCH in each DL BWP/CC belonging to a DL BWP/CC pair (if a position of allocated HARQ-ACK is the same resource position of the same BWP/CC (e.g., the same slot)) and report it to a base station. For example, a method similar to joint HARQ-ACK in a multi-DCI-based MTRP operation may be applied. For a dynamic HARQ codebook (or a type-2 HARQ-ACK codebook), count-DAI (C-DAI)/total-DAI (T-DAI) for TRP 1 (or BWP1/CC1) and TRP2 (or BWP2/CC2) may be jointly counted. For a semi-static HARQ codebook (or a type-1 HARQ-ACK codebook), ACK/NACK bits for TRP1 (or BWP1/CC1) and TRP2 (BWP2/CC2) may be concatenated according to BWP/CC index order.

Embodiment 3-1 described HARQ-ACK for a PDSCH, and in addition, a similar method may be also applied to transmission of a response to another DL CH/RS/information other than a PDSCH (e.g., measurement reporting, ACK information, etc.).

When Embodiment 3 is applied to a DL RS (e.g., a SSB, a CSI-RS), a terminal may perform measurement for each DL RS. Single reporting information may be formed based on a plurality of corresponding measurement values or may be formed separately as each reporting information according to information calculated/reported by a terminal.

As an example in which single reporting information is formed, CQI/SINR may be calculated by assuming that one is a desired channel and the other is an interference channel. Alternatively, one of metrics calculated respectively for a plurality of measurement values (e.g., RSRP, SINK, CQI) may be selectively reported (e.g., report only a DL RS with high quality, report a DL RS that a metric value exceeds a preconfigured/predefined threshold, report only one of DL RSs that a metric value exceeds a preconfigured/predefined threshold, etc.).

As an example in which individual reporting information is formed, independent reporting information (e.g., UCI, MAC-CE) may be generated and transmitted for a value measured/calculated for each DL RS (e.g., CSI, a RRM measurement value). Alternatively, values measured/calculated for each DL RS (e.g., CSI, a RRM measurement value) may be bundled to generate and transmit single reporting information (e.g., UCI, MAC-CE).

Embodiment 3-2

For a DL RS (e.g., a CSI-RS, a SSB) received according to Embodiment 3, a terminal may derive a measurement value based on a corresponding signal (e.g., CSI, RSRP/SINR, a RRM measurement value, etc.) and reporting information generated based thereon (e.g., UCI, MAC-CE) may be single information (e.g., single UCI, single MAC-CE) and/or a plurality of individual information (e.g., individual UCI, individual MAC-CE).

Whether it is configured with single information or individual information may vary depending on a type of a measurement value and/or a configuration of a base station.

A terminal's reporting information formed as above may be transmitted through a single or a plurality of UL BWP/CC(s) associated with a plurality of DL BWPs/CCs belonging to a DL BWP/CC pair.

For example, when it is transmitted by being formed with single information, corresponding information may be transmitted through Embodiment 1-2-1, Embodiment 1-2-2, or Embodiment 1-2-3.

For example, when it is transmitted by being formed with individual information, all of a plurality of this reporting information may be transmitted through one specific UL BWP/CC (e.g., similar to Embodiment 1-2-1), or each reporting information may be transmitted to each UL BWP/CC according to a DL-UL association relationship.

Embodiment 4

According to this embodiment, a base station may configure/indicate STxMP Scheme 2 to a terminal (e.g., Scheme 2-1 in which a plurality of layers/ports configuring the same CH/RS resource are divided and transmitted in each panel, Scheme 2-2 in which a different CH/RS resource is transmitted in each panel) by configuring/indicating a DL RS/CH respectively at a fully/partially/non-overlapping time-frequency position in each BWP/CC belonging to an UL BWP/CC pair. It is similar to Embodiment 3 which supports simultaneous transmission for DL NCJT or heterogeneous CH/RS by configuring/indicating a DL RS/CH respectively in each BWP/CC belonging to a DL BWP/CC pair in a downlink.

A terminal that received this configuration/indication may perform simultaneous transmission for each UL RS/CH (e.g., STxMP Scheme 2) by applying a separate spatial parameter and separate power control to each UL BWP/CC. Specifically, a terminal may perform simultaneous transmission for each UL RS/CH (e.g., STxMP Scheme 2), while performing UL power control (for each panel/beam performing simultaneous transmission) according to a transmission beam (or Tx filter) configuration and each configured UL power control-related information (e.g., a pathloss RS, a closed-loop power control index, an open-loop power control parameter) (for each panel performing simultaneous transmission) through each configured spatial relation RS/UL TCI information for each UL BWP/CC (while performing UL synchronization, respectively).

When a resource does not overlap (i.e., is transmitted/received at a different frequency position in the same time unit (e.g., symbol)), based on application of a separate spatial parameter configured for each resource and separate power control, etc., simultaneous transmission for UL RS/CH (e.g., STxMP Scheme 2) may be performed.

For example, SRS ports belonging to corresponding SRS resources may be simultaneously transmitted/received through SRS resources configured at an overlapping resource position. Specifically, the same SRS resource (i.e., the same sequence at the same/overlapping RE position) may be allocated to each BWP/CCin a duplicate/overlapping manner, but different port(s) may be allocated. Accordingly, orthogonality may be secured between SRSs in each BWP/CC. Alternatively, a different SRS resource may be allocated in an overlapping way for each BWP/CC. In this case, in order to secure (quasi-)orthogonality between antenna ports belonging to overlapping SRS resources, TDM/FDM/CDM that distinguishes a resource in a time/frequency/code domain may be applied. For CDM, a method for applying a time/frequency domain orthogonal cover code (OCC), or a parameter related to SRS sequence generation (e.g., a sequence initialization parameter) may be configured/adjusted differently. Accordingly, a (quasi-)orthogonal sequence may be applied between overlapping SRS resources.

For example, a PUSCH according to STxMP scheme 2-1 may be transmitted/received through a PUSCH scheduled at an overlapping resource position. In this case, different port(s) may be applied between DMRSs transmitted for each UL BWP/CC/PDSCH. For a transmission rank transmitted in an overlapping resource, the sum of transmission ranks configured/indicated for each PUSCH may be applied. In addition, terminal complexity according to a variety of rank combinations may be reduced by limiting a transmission rank configured/indicated to each PUSCH to be the same, and/or limiting it to be equal to or less than a predetermined rank value (e.g., rank 1). In addition, a rank combination supported by a terminal may be reported to a base station (in advance as terminal capability reporting information).

For example, UL RS/CH #0 configured/allocated in BWP0/CC0 and UL RS/CH #1 configured/allocated in BWP1/CC1 are fully/partially/non-overlapping, so UL RS/CH #0 and UL RS/CH #1 may be simultaneously transmitted/received (e.g., STxMP Scheme 2-2). In this case, a different UL RS resource/channel may overlap. Even for a non-overlapping case, even when UL RS/CH #0 and UL RS/CH #1 are allocated to a different frequency position especially in the same symbol, simultaneous transmission as above may be applied.

For an UL BWP/CC pair to which Embodiment 4 is applied (if a plurality of DL BWPs/CCs are connected), a base station's DL response to corresponding UL transmission may be transmitted respectively from a corresponding connected DL BWP/CC or may be transmitted from one specific DL BWP/CC. A base station's DL response to a terminal's UL transmission may include, for example, a base station's response to a terminal's (event-based or network trigger-based) reporting information, a base station's ACK for UL-SCH/UCI transmission, a base station's response message to a terminal's specific higher layer message (e.g., MAC-CE, RRC) transmission, a base station's DL transmission subsequent to a terminal's SRS/PRACH transmission, etc. One specific DL BWP/CC may be a BWP/a CC configured/designated by a base station, may be a BWP/a CC determined according to a prescribed rule (e.g., a BWP/a CC with a lower ID), or may be a BWP/a CC designated/reported by a terminal.

In Embodiment 2 and Embodiment 4, an UL CH/RS resource may be allocated/configured independently by transmitting each control information (e.g., DCI/MAC-CE/RRC signaling IE) in each DL BWP/CC connected to an UL BWP/CC pair. In addition, allocation/configuration for an UL BWP/CC pair may be performed in one DL BWP/CC. For example, for a dynamic grant PUSCH or an aperiodic SRS, similar to the existing cross-carrier scheduling method, PUSCH/SRS transmission for a plurality of UL BWPs/CCs belonging to an UL BWP/CC pair may be triggered together through DCI transmitted in one specific DL BWP/CC (e.g., a primary cell (PCell). In addition, Embodiment 2/Embodiment 4 may be applied according to whether a corresponding triggered BWP/CC belongs to a pair and/or whether a resource overlaps.

As such, when allocation to an UL BWP/CC pair is performed with single control information in a single DL BWP/CC, resource allocation, power control-related information, etc. may be consistent (i.e., common) with a plurality of BWPs/CCs, so it may be used to omit (part of) corresponding information and configure control information. For example, if control information includes only one resource allocation information, it may be commonly applied to a corresponding UL BWP/CC pair.

Likewise, even in applying Embodiment 1 and Embodiment 3, allocation/configuration for a DL BWP/CC pair may be performed by one specific DL BWP/CC. For example, PDSCH scheduling and/or CSI-RS triggering, etc. for a plurality of BWPs/CCs belonging to a DL BWP/CC pair may be performed by transmitting control information from a specific BWP/CC belonging to a BWP/CC pair or another DL BWP/CC not belonging to a corresponding pair. Embodiment 1/Embodiment 3 may be applied according to whether a corresponding triggered BWP/CC belongs to a pair and/or whether a resource overlaps.

As such, when allocation to a DL BWP/CC pair is performed with single control information in a single DL BWP/CC, resource allocation, power control-related information, etc. may be consistent (i.e., common) with a plurality of BWPs/CCs, so it may be used to omit (part of) corresponding information and configure control information. For example, if control information includes only one resource allocation information, it may be commonly applied to a corresponding DL BWP/CC pair.

In applying the above-described examples, a specific UL channel/information/signal (e.g., a PUCCH, a PRACH) may be transmitted only in a specific UL CCBWP type (e.g., SpCell, PUCCH-SCell).

The above-described Embodiment 1, 2, 3 and 4 may be supported for a terminal capable of receiving a plurality of Rx beams/panels (e.g., a terminal capable of supporting multi-DL TCI-based simultaneous reception, or a terminal capable of supporting Embodiment 1/Embodiment 3), or a terminal capable of transmitting a plurality of Tx beams/panels (e.g., a terminal capable of supporting multi-spatial relation RS-based simultaneous transmission, or a terminal capable of supporting Embodiment 2/Embodiment 4). Embodiment 3 has higher terminal implementation complexity than Embodiment 1 and Embodiment 4 has higher terminal implementation complexity than Embodiment 2, so a higher terminal capability may be required.

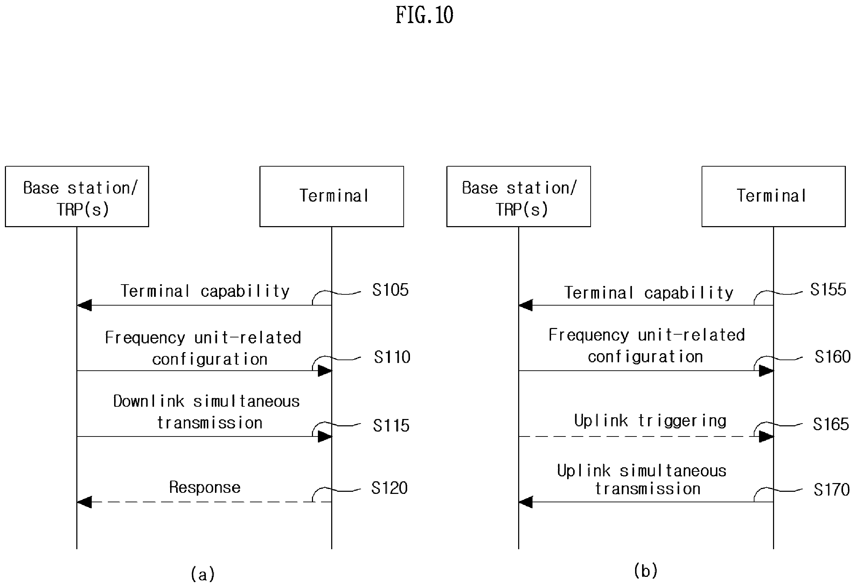

FIG. 10 is a diagram for describing a signaling procedure between a network side and a terminal side according to an embodiment of the present disclosure.

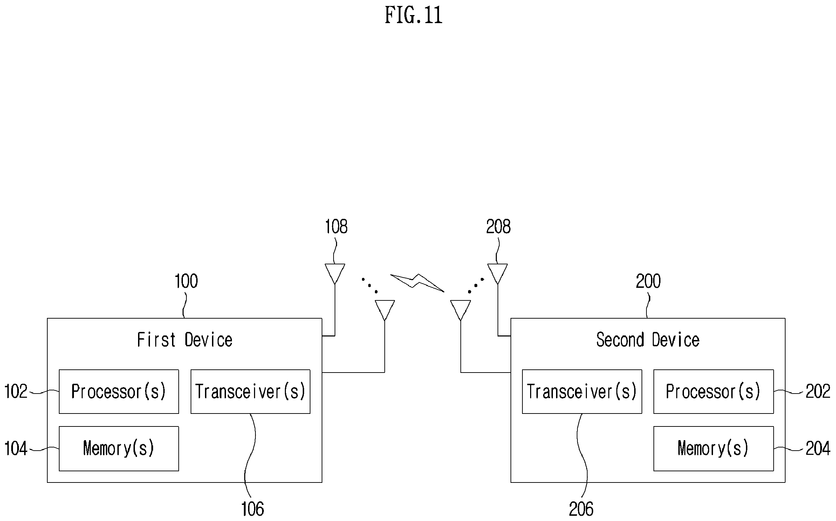

FIG. 10 (a) and (b) show an example of signaling between a terminal (or UE)/a base station (or TRPs) based on the above-described examples (e.g., an embodiment of the above-described multi-frequency unit-based simultaneous transmission/reception, Embodiment 1, 2, 3, 4, or a detailed embodiment thereof, etc.). Here, UEBS is just an example, and may be applied by being replaced with a variety of devices described in FIG. 11. Examples in FIG. 10 are simply expressed for clarity of a description, and do not limit a scope of the present disclosure. In addition, some step(s) shown in examples of FIG. 10 may be omitted according to a situation and/or a configuration, etc.

It is assumed that UE and/or a BS in FIG. 10(a) supports multi-panel/TRP transmission/reception. In addition, a TRP/a panel may correspond to a unit configured with one or a plurality of antenna(s), antenna port(s), beam(s), or uplink/downlink RS/CH resource(s) of a terminal. For example, an uplink transmission panel may be identified based on a source RS (e.g., an UL TCI, spatial relation information) for an uplink CH/RS.' A downlink transmission TRP may be identified based on a source RS (e.g., a DL TCI, a QCL RS) for a downlink CH/RS. Specifically, an uplink/downlink panel may be identified based on a unit that has a specific (panel-related) ID or a set/group (ID) of a specific UL/DL resource as a source RS.

An example in FIG. 10(a) illustratively shows a signaling procedure related to multi-TRP transmission.

UE may report UE capability information to a BS (S105). UE capability information may include information related to simultaneous reception. As an example, UE capability information may include the maximum number of TRPs that may be configured for UE, information on whether downlink multi-TRP simultaneous reception may be performed (for a specific DL CH/RS), information on whether to support a simultaneous transmission method (e.g., Embodiment 1/Embodiment 3) supported (for a specific DL CH/RS).

UE may receive a downlink transmission-related configuration from a BS (S 110). As an example, this configuration may include TRP-related configuration information for DL reception of a terminal. As a specific example, a TRP-related configuration may include a configuration for DL reception such as a PDCCH, a PDSCH, a CSI-RS, a SSB, etc. In particular, a configuration may include a configuration related to the above-described multi-frequency unit-based simultaneous transmission/reception embodiment (e.g., information related to a BWP/CC pair), configuration information related to application of Embodiment 1/Embodiment 3, etc. This configuration may be configured through a RRC message and/or a MAC-CE message and/or DCI, may be configured in a form of an existing IE and/or an existing field, etc. or may be configured in a form of a newly defined IE and/or a newly defined field, etc.

Simultaneous MTRP transmission may be performed based on BWP/CC-related configuration information (S 110) (S 115). As an example, MTRP SFN transmission (e.g., Embodiment 1) may be applied through an overlapping DL RS/CH resource configured in an overlapping BWP/CC. Alternatively, MTRP NCJT transmission or simultaneous transmission for a heterogeneous CH/RS (e.g., Embodiment 3) may be applied through an overlapping DL RS/CH resource configured in an overlapping BWP/CC.

A terminal's response signal/information for DL transmission as above may be transmitted (S120). The above-described example (e.g., Embodiment 1-1/1-2/1-3/3-1/3-2, etc.) may be applied to this UL transmission.

An example in FIG. 10(b) illustratively shows a signaling procedure related to multi-panel transmission.

UE may report UE capability information to a BS (S155). This UE capability information may include information related to simultaneous transmission. As an example, UE capability information may include the maximum number of panels that may be configured for UE, the maximum number of panels that may be activated simultaneously by UE, information on whether uplink multi-panel simultaneous transmission may be performed (for a specific UL CH/RS), information on a simultaneous transmission method (e.g., whether to support STxMP Scheme 1, Scheme 2-1, or Scheme 2-2, whether to support Embodiment 2 or Embodiment 4) supported (for a specific UL CH/RS), etc.

UE may receive an uplink transmission-related configuration from a BS (S 160). As an example, this configuration may include panel-related configuration information for UL transmission of a terminal. As a specific example, a panel-related configuration may include configuration information for UL transmission such as a PUCCH, a PUSCH, a SRS, a PRACH, etc. In particular, a configuration may include a configuration related to the above-described multi-frequency unit-based simultaneous transmission/reception embodiment (e.g., information related to a BWP/CC pair), configuration information related to application of Embodiment 2/Embodiment 4, etc. This configuration may be configured through a RRC message and/or a MAC-CE message and/or DCI, may be configured in a form of an existing IE and/or an existing field, etc. or may be configured in a form of a newly defined IE and/or a newly defined field, etc.

A base station may trigger UL transmission based on BWP/CC-related configuration information (S160) (S165). In this process, the above-described Embodiment 2-1 may be applied.

A terminal that received this message may perform STxMP transmission (S170). As an example, STxMP Scheme 1 transmission (e.g., Embodiment 2) may be applied through an overlapping UL RS/CH resource configured in an overlapping BWP/CC. Alternatively, STxMP scheme 2-1 or Scheme 2-2 (e.g., Embodiment 4) may be applied through an overlapping UL RS/CH resource configured in an overlapping BWP/CC. In this STxMP transmission, the above-described examples (e.g., Embodiment 2/2-2/4, etc.) may be applied.

As mentioned above, the above-described BS/UE signaling and operation (e.g., an embodiment of the above-described multi-frequency unit-based simultaneous transmission/reception, Embodiment 1, 2, 3, 4, or a detailed embodiment thereof, etc.) may be implemented by a device 100 and 200 in FIG. 11. For example, a BS (e.g., TRP1/TRP2) may correspond to a first wireless device 100, and UE may correspond to a second wireless device 200, and an opposite case may be also considered in some cases.

For example, the above-described BS/UE signaling and operation may be processed by a processor in FIG. 11 (e.g., 102, 202), and the above-described BS/UE signaling and operation may be stored in a memory (e.g., at least one memory (e.g., 104, 204) in FIG. 11) in a form of a command/a program (e.g., an instruction, an executable code) for driving at least one processor in FIG. 11 (e.g., 102, 202).

General Device to which the Present Disclosure may be applied

FIG. 11 is a diagram which illustrates a block diagram of a wireless communication system according to an embodiment of the present disclosure.

In reference to FIG. 11, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for performing an uplink transmission or a downlink reception by a terminal in a wireless communication system, the method comprising:

   receiving, from a network, configuration information related to a group of frequency units for at least one of an uplink or a downlink; and
   based on at least one of a reference signal-related resource or a channel-related resource for a first frequency unit and a second frequency unit included in the group of frequency units, performing, in a same time unit, the uplink transmission or the downlink reception on the first frequency unit and the second frequency unit,
   wherein the first frequency unit and the second frequency unit at least partially overlap on a frequency domain.

2. The method of claim 1, wherein:
   for the overlapping resource of a group of downlink frequency units, based on a downlink channel-related resource for the first frequency unit and the second frequency unit being common, one specific frequency unit identification information related to information included in the downlink channel is applied.

3. The method of claim 1, wherein:
   for the overlapping resource of a group of downlink frequency units, based on a downlink reference signal-related resource related to the first frequency unit and the second frequency unit being common, single reporting information is applied based on the downlink reference signal.

4. The method of claim 1, wherein:

for the overlapping resource of a group of downlink frequency units, based on a downlink channel-related resource related to the first frequency unit and the second frequency unit being common, single hybrid automatic repeat request-acknowledgement (HARQ-ACK) information is applied to the downlink channel.

5. The method of claim 1, wherein:

for the overlapping resource of a group of uplink frequency units, based on an uplink channel-related resource related to the first frequency unit and the second frequency unit being common, identification information for a downlink frequency unit related to information included in the uplink channel is applied.

6. The method of claim 1, wherein:

for the overlapping resource of a group of uplink frequency units, based on an uplink channel-related resource related to the first frequency unit and the second frequency unit being common, identification information for a downlink frequency unit related to information included in the uplink channel is reported from the terminal to the network.

7. The method of claim 1, wherein:

for the overlapping resource of a group of downlink frequency units, based on a downlink channel-related resource related to the first frequency unit and the second frequency unit being separate, separate or single HARQ-ACK information is applied to the downlink channel.

8. The method of claim 1, wherein:

for the overlapping resource of a group of downlink frequency units, based on a downlink reference signal-related resource related to the first frequency unit and the second frequency unit being separate, separateor single reporting information is applied based on the downlink reference signal.

9. The method of claim 1, wherein:

for the overlapping resource of a group of uplink frequency units, based on an uplink channel-related resource or an uplink reference signal-related resource related to the first frequency unit and the second frequency unit being separate,

a different resource of a same uplink channel, a different resource of a same uplink reference signal, a different uplink channel, a different uplink reference signal, or an uplink channel and an uplink reference signal is transmitted in the same time unit.

10. The method of claim 1, wherein:

the group of frequency units is configured in separate way for the uplink or the downlink, or is configured in unified way for the uplink and the downlink.

11. The method of claim 1, wherein:

the first frequency unit belongs to a first frequency unit pool, and the second frequency unit belongs to a second frequency unit pool.

12. The method of claim 1, wherein:

a separate synchronization parameter is applied to each of the first frequency unit and the second frequency unit.

13. The method of claim 12, wherein:

the synchronization parameter includes at least one of a timing advance (TA) value for the uplink, quasi-co-location (QCL) reference sharing-related information for the downlink, or fast Fourier transform (FFT) window timing-related information for the downlink.

14. The method of claim 1, wherein:

the first frequency unit and the second frequency unit are activated simultaneously.

15. The method of claim 1, wherein:

the frequency unit corresponds to at least one of a cell, or a bandwidth part (BWP).

16. The method of claim 15, wherein:
the first frequency unit and the second frequency unit correspond to a first BWP and a second BWP of a same cell, or correspond to a first BWP and a second BWP of a second cell.

17. A terminal for performing an uplink transmission or a downlink reception in a wireless communication system, the terminal comprising:

at least one transceiver; and
at least one processor connected to the at least one transceiver,
wherein the at least one processor is configured to:

receive, through the at least one transceiver, from a network, configuration information related to a group of frequency units for at least one of an uplink or a downlink; and
based on at least one of a reference signal-related resource or a channel-related resource for a first frequency unit and a second frequency unit included in the group of frequency units, perform, through the at least one transceiver, in a same time unit, the uplink transmission or the downlink reception on the first frequency unit and the second frequency unit,
wherein the first frequency unit and the second frequency unit at least partially overlap on a frequency domain.

18. A method for performing an uplink reception or a downlink transmission by a base station in a wireless communication system, the method comprising:

transmitting, to a terminal, configuration information related to a group of frequency units for at least one of an uplink or a downlink; and
based on at least one of a reference signal-related resource or a channel-related resource for a first frequency unit and a second frequency unit included in the group of frequency units, performing, in a same time unit, the uplink reception or the downlink transmission on the first frequency unit and the second frequency unit,
wherein the first frequency unit and the second frequency unit at least partially overlap on a frequency domain.

19. A base station for performing an uplink reception or a downlink transmission in a wireless communication system, the base station comprising:

at least one transceiver; and
at least one processor connected to the at least one transceiver,
wherein the at least one processor is configured to:

transmit, through the at least one transceiver, to a terminal, configuration information related to a group of frequency units for at least one of an uplink or a downlink; and
based on at least one of a reference signal-related resource or a channel-related resource for a first frequency unit and a second frequency unit included in the group of frequency units, perform, through the at least one transceiver, in a same time unit, the uplink reception or the downlink transmission on the first frequency unit and the second frequency unit,
wherein the first frequency unit and the second frequency unit at least partially overlap on a frequency domain.

20. A processing unit configured to control a terminal in a wireless communication system, the processing unit comprising:

at least one processor; and
at least one computer memory which is operably connected to the at least one processor and stores instructions for performing a method according to any one of Claim 1 to Claim 16 based on being executed by the at least one processor.

21. At least one non-transitory computer readable medium storing at least one instruction, wherein:
the at least one instruction controls a device to perform a method according to any one of Claim 1 to Claim 16 in a wireless communication system by being executed by at least one processor.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

FIG.6

INITIAL CELL SEARCH — PSS/SSS& [DL RS] & PBCH — S601

SYSTEM INFORMATION RECEPTION — PDCCH/PDSCH (BCCH) — S602

RANDOM ACCESS PROCEDURE — PRACH — S603 — PDCCH/PDSCH — S604 — PUSCH — S605 — PDCCH/PDSCH — S606

GENERAL DL/UL Tx/Rx — PDCCH/PDSCH — S607 — PUSCH/PUCCH — S608

· DL/UL ACK/NACK
· UE CQI/PMI RI REPORT USING PUSCH AND PUCCH

FIG.7

(a)

(b)

## FIG.8

```
┌─────────────────────────────────────────────┐
│          Receive configuration information   │
│          related to frequency unit group     │  ～ S810
│                for uplink/downlink           │
└─────────────────────────────────────────────┘
                       │
                       ▼
┌─────────────────────────────────────────────┐
│   Perform uplink transmission/downlink       │
│   reception on a plurality of frequency      │  ～ S820
│   units in the same time unit based on       │
│   RS/CH-related resource for frequency       │
│   unit group                                 │
└─────────────────────────────────────────────┘
```

## FIG.9

```
┌─────────────────────────────────────────────┐
│          Transmit configuration information  │
│          related to frequency unit group     │  ～ S910
│                for uplink/downlink           │
└─────────────────────────────────────────────┘
                       │
                       ▼
┌─────────────────────────────────────────────┐
│   Perform uplink reception/downlink          │
│   transmission on a plurality of frequency   │  ～ S920
│   units in the same time unit based on       │
│   RS/CH-related resource for frequency       │
│   unit group                                 │
└─────────────────────────────────────────────┘
```

# FIG.10

(a)

- Terminal capability — S105
- Frequency unit-related configuration — S110
- Downlink simultaneous transmission — S115
- Response — S120

(b)

- Terminal capability — S155
- Frequency unit-related configuration — S160
- Uplink triggering — S165
- Uplink simultaneous transmission — S170

Base station/TRP(s)    Terminal

FIG.11

<table>
<tr><td colspan="2" align="center">**INTERNATIONAL SEARCH REPORT**</td><td>International application No.<br>**PCT/KR2022/016520**</td></tr>
</table>

| A. | CLASSIFICATION OF SUBJECT MATTER |
|---|---|
| | **H04W 72/04**(2009.01)i; **H04W 56/00**(2009.01)i; **H04L 1/18**(2006.01)i; **H04L 5/00**(2006.01)i; **H04L 27/26**(2006.01)i |

According to International Patent Classification (IPC) or to both national classification and IPC

| B. | FIELDS SEARCHED |
|---|---|

Minimum documentation searched (classification system followed by classification symbols)

H04W 72/04(2009.01); H04L 5/00(2006.01); H04W 56/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: STxMP(simultaneous transmission across multi-panel), MTRP, MPUE, DL/UL, BWP, CC, pair, group, reference signal, channel, same, time, overlap, frequency

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0127185 A (QUALCOMM INCORPORATED) 10 November 2020 (2020-11-10)<br>See paragraphs [0023]-[0113]; and figures 6 and 13-14. | 1,10-11,14-21 |
| Y | | 12-13 |
| A | | 2-9 |
| Y | KR 10-2020-0079487 A (QUALCOMM INCORPORATED) 03 July 2020 (2020-07-03)<br>See claim 1. | 12-13 |
| A | WO 2021-020847 A1 (LG ELECTRONICS INC.) 04 February 2021 (2021-02-04)<br>See paragraphs [0334]-[0668]; and figures 13-15. | 1-21 |
| A | US 2020-0351039 A1 (QUALCOMM INCORPORATED) 05 November 2020 (2020-11-05)<br>See paragraphs [0113]-[0121]; and figure 5. | 1-21 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/016520** |

C.      DOCUMENTS CONSIDERED TO BE RELEVANT

| Category* | Citation of document, with indication, where appropriate, of the relevant passages | Relevant to claim No. |
| --- | --- | --- |
| A | VIVO. Further discussion on multi beam enhancement. R1-2106571, 3GPP TSG RAN WG1 #106-e, e-Meeting. 07 August 2021. <br>     See section 4. | 1-21 |

Form PCT/ISA/210 (second sheet) (July 2022)

**INTERNATIONAL SEARCH REPORT**
**Information on patent family members**

International application No.

**PCT/KR2022/016520**

| Patent document cited in search report | | | Publication date (day/month/year) | Patent family member(s) | | | Publication date (day/month/year) |
|---|---|---|---|---|---|---|---|
| KR | 10-2020-0127185 | A | 10 November 2020 | CN | 111819904 | A | 23 October 2020 |
| | | | | EP | 3759991 | A1 | 06 January 2021 |
| | | | | EP | 3759991 | B1 | 26 January 2022 |
| | | | | EP | 3996461 | A1 | 11 May 2022 |
| | | | | JP | 2021-516008 | A | 24 June 2021 |
| | | | | US | 11363630 | B2 | 14 June 2022 |
| | | | | US | 2019-0274162 | A1 | 05 September 2019 |
| | | | | US | 2022-0279574 | A1 | 01 September 2022 |
| | | | | WO | 2019-169118 | A1 | 06 September 2019 |
| KR | 10-2020-0079487 | A | 03 July 2020 | CN | 111316720 | A | 19 June 2020 |
| | | | | CN | 111316720 | B | 29 March 2022 |
| | | | | EP | 3704908 | A1 | 09 September 2020 |
| | | | | JP | 2021-502020 | A | 21 January 2021 |
| | | | | US | 11540256 | B2 | 27 December 2022 |
| | | | | US | 2019-0141697 | A1 | 09 May 2019 |
| | | | | WO | 2019-089964 | A1 | 09 May 2019 |
| WO | 2021-020847 | A1 | 04 February 2021 | US | 2022-0272674 | A1 | 25 August 2022 |
| US | 2020-0351039 | A1 | 05 November 2020 | CN | 113748638 | A | 03 December 2021 |
| | | | | EP | 3963813 | A1 | 09 March 2022 |
| | | | | KR | 10-2022-0003526 | A | 10 January 2022 |
| | | | | US | 11563531 | B2 | 24 January 2023 |
| | | | | WO | 2020-227010 | A1 | 12 November 2020 |

Form PCT/ISA/210 (patent family annex) (July 2022)